# EUROPEAN PATENT SPECIFICATION

(11) **EP 3 661 348 B1**
(45) Date of publication and mention of the grant of the patent: **24.02.2021**
(21) Application number: 18743037.6
(22) Date of filing: 27.07.2018
(51) Int. Cl.: A01G 7/04

(54) **WAKE UP LIGHT OPTIMIZATION FOR PLANT GROWTH**
AUFWECKLICHTOPTIMIERUNG FÜR PFLANZENWACHSTUMS
OPTIMISATION DE LA LUMIÈRE DE RÉVEIL POUR LA CROISSANCE DES PLANTES

(30) Priority: 31.07.2017 EP 17183979
(43) Date of publication of application: 10.06.2020
(73) Proprietor: Signify Holding B.V., 5656 AE Eindhoven (NL)
(72) Inventor: NICOLE, Céline Catherine Sarah, 5656 AE Eindhoven (NL); LU, Weifan, 5656 AE Eindhoven (NL)
(74) Representative: Vanden Wyngaert, Hilbrand
(86) International application number: PCT/EP2018/070375
(87) International publication number: WO 2019/025301

(56) References cited:
- WO-A1-2013/027198
- WO-A1-2014/188303
- WO-A1-2016/115235
- WO-A2-2007/105946
- US-A1- 2015 128 489

## Description

### FIELD OF THE INVENTION

The invention relates to a horticulture lighting system and to a horticulture arrangement comprising such horticulture lighting system. The invention further relates to a method for providing light to a plant, wherein such horticulture lighting arrangement may be applied, as well as to a computer program product for executing such method.

### BACKGROUND OF THE INVENTION

US2015/0121753 describes a method and apparatus for selective photomorphogenesis of plants by directly illuminating the plant stem or other plant structures using various wavelengths of light and various light sources. The methods and apparatus disclosed can be used in commercial agriculture, plant breeding research programs, genetically engineered plant research and development programs or anytime a plant grower desires to maximize the volumetric efficiency or reduce the height of a plant. The document further describes that any light source known to those of skill in the art capable of producing light between 280 nm and 800 nm is useful. Such light sources include, but are not limited to: LEDs, electroluminescent strips, filtered fluorescent light, and the like. The light source may be pulsed or continuous wave. LEDs are an exemplary light source, as they are inexpensive, power efficient, and can be purchased with very specific wavelengths. While LEDs can be purchased with a specific wavelength specified (e.g., 450 nm light), the spectrum of an LED is not exclusively limited to the specified wavelength. For LEDs and all other lighting sources, when a specific wavelength is referred to herein, this represents a peak wavelength and not an exclusive wavelength. Filters and other optical components known to those of skill in the art can be used to further process and inhibit the spectrum of a light source as needed for a specific application.

US 2015/128489 A1 discloses a plant growing system wherein a first light source irradiates a plant with light having a peak wavelength in a range from 380 to 560 nm and a peak wavelength in a range from 560 to 680 nm and a second light source irradiates the plant with far-red light having a peak wavelength in a range from 685 to 780 nm. Further, a control unit controls the first and the second light source to perform respective irradiation operations and a time setting unit sets a first and a second time zone in which the control unit controls the first and the second light source to perform the respective irradiation operations. The first time zone ranges from a first predetermined time before sunset to a second predetermined time after sunset, and the second time zone starts after the first light source completes its irradiation operation.

### SUMMARY OF THE INVENTION

Plants use the process of photosynthesis to convert light, CO₂ and H₂O into carbohydrates (sugars). These sugars are used to fuel metabolic processes. The excess of sugars is used for biomass formation. This biomass formation includes stem elongation, increase of leaf area, flowering, fruit formation, etc. The photoreceptor responsible for photosynthesis is chlorophyll. Apart from photosynthesis, also photoperiodism, phototropism and photomorphogenesis are representative processes related to interaction between radiation and plants:
- photoperiodism refers to the ability that plants have to sense and measure the periodicity of radiation (e.g. to induce flowering),
- phototropism refers to the growth movement of the plant towards and away from the radiation, and
- photomorphogenesis refers to the change in form in response to the quality and quantity of radiation.

Two important absorption peaks of chlorophyll a and b are located in the red and blue regions, especially from 625-675 nm and from 425-475 nm, respectively. Additionally, there are also other localized peaks at near-UV (300-400 nm) and in the far-red region (700-800 nm). The main photosynthetic activity seems to take place within the wavelength range 400-700 nm. Radiation within this range is called photosynthetically active radiation (PAR).

Other photo sensitive processes in plants include phytochromes. Phytochrome activity steers different responses such as leaf expansion, neighbor perception, shade avoidance, stem elongation, seed germination and flowering induction. The phytochrome photo system includes two forms of phytochromes, Pr and Pfr, which have their sensitivity peaks in the red at 660 nm and in the far-red at 730 nm, respectively.

In horticulture, the photosynthetic photon flux density (PPFD) is measured in number of photons per second per unit of area (in µmol/sec/m²; a mol corresponding to 6·10²³ photons). In practice, when applying e.g. inter-lighting (see below), especially for tomatoes, the red PPFD used maybe typically 200 µmol/sec/m² and the ratio blue:red maybe typically 1:7 (with red and blue ranging from 625-675 nm and from 400-475 nm respectively). Especially, the photosynthetic photon flux density may comprise about 10% blue and about 90% red. The PPFD can be determined from a photodiode or measured directly with a photomultiplier. The area in the PPFD refers to the local light receiving (plant) area of the space wherein the light source(s) are arranged. In case of a multi-layer system, it is the area of a relevant layer comprised in the multi-layer configuration; the PPFD may then be estimated in relation to each layer individually (see further also below). The area may be a value in an embodiment fed to the control unit manually, or may in an embodiment be evaluated (with e.g. sensors) by the control unit.

Plant growth depends not only on the amount of light but also on spectral composition, duration, and timing of the light on the plant. A combination of parameter values in terms of these aspects is called "light recipe" for growing the plant (herein, the words plant and crop can be interchanged).

LEDs can play a variety of roles in horticultural lighting such as:
1. Supplemental lighting: Lighting that supplements the natural daylight is used in order to increase production (of tomatoes for example) or extend crop production during e.g. the autumn, winter, and spring period when crop prices may be higher.
2. Photoperiodic lighting: The daily duration of light is important for many plants. The ratio of the light and dark period in a 24 hour cycle influences the blossoming response of many plants. Manipulating this ratio by means of supplemental lighting enables regulating the time of blossoming.
3. Cultivation without daylight in plant factories.
4. Tissue culture.

For providing supplemental lighting during autumn, winter and spring in green-houses (or all-year round in multi-layer growth), in general high-power gas-discharge lamps are used that have to be mounted at a relative high location above the plants to ensure sufficiently uniform light distribution across the plants. At present, in green houses different types of high power lamps ranging from 600 up to 1000 W (e.g. high power HID) are used to provide plants with supplemental light. One drawback is that from the location above the plants the amount of light reaching the lower parts of the plant may be rather limited, dependent upon the type of crop. At the same time, the lower parts of the plant are often most in need of supplemental light. The same dilemma persists when using solid state lighting that is mounted above the plants. Nevertheless, solid state lighting, especially LED lighting, has some advantages over discharge based lighting.

In circumstances that plants get insufficient light from natural sunlight, e.g. in northern regions or in so-called "plant farming" or "vertical farming" that fully rely on artificial and well controlled conditions, there appears to be a need to provide light to the plant for growing (leaf and fruit), ripening and pre-harvest conditioning.

Light is not the only enabler for growth; also atmosphere (humidity level, CO₂/O₂ levels, etc.), water, nutrients and spore elements are of main importance. Temperature (and temperature profile/cycles over day/night) is also a key contributor to the success of growing plants. In the field of open air horticulture, it seems that there is a need for soilless or hydroponic horticulture, typically used for now in high profit/high value cultivation. Such methods are also based on non-natural growing of plants and could require or profit from artificial optimizations.

The space available for food production is becoming scarcer. Innovation in production methods is needed to deliver higher yields from smaller footprints, while becoming more sustainable (minimum use of energy and water). Producing food in closed environments such as plant farms is a method to meet these demands. In plant farms (also known as plant factories, vertical farms or city farms), food is grown in multiple layers, making much better use of the available space as compared to outdoor growth or growth in greenhouses. This implies that daylight will not be able to reach all plants and nearly all the light has to come from artificial lighting. In plant farms, there is a need for providing to the plants a light treatment that is optimal at all times. At the same time, it is imperative that the light that is generated by the LED modules is used as efficiently as possible in order to reduce energy consumption and result in a profitable business. In plant farms, the production per unit of area is much higher than the production in the open field. The use of water is minimized. Plant diseases and pests can be prevented more easily.

In horticulture, relatively much light, and thus energy is used. Producing with higher yield while using less photons is the key for the future of horticulture.

Hence, it is an aspect of the invention to provide an alternative horticulture lighting system, horticulture arrangement and/or horticulture lighting method, which preferably further at least partly obviate one or more of above-described drawbacks. The present invention may have as object to overcome or ameliorate at least one of the disadvantages of the prior art, or to provide a useful alternative.

Plant stomata are sensitive to light, light level and light colors. When light is turned on after a dark period, stomata slowly open up in order to start the photosynthesis machinery. When plants are grown within a certain climate room (with certain temperature and humidity settings), this growth process might not be always optimally occurring. Stomata are also playing an important role in transpiration/respiration; therefore they are also opening and closing for other purposes than light. It is therefore important to understand the dynamic of opening and closing of the stomata in a day cycle of a plant to make the best use of the light sent to them during the growth period.

Forcing the stomata to open may not always be desirable. For instance, forcing stomata opening might cause the plant to go into a stress regime which is negative for growth, or can also alter water relations and/or water balance in the plant necessary for the nutrient uptake and the proper root pressure. Hence, presently it is not known how to improve yield of horticulture without risk of using too much energy at the wrong time.

Surprisingly, it was found that the use of a "wake up light", which can only be a small fraction of total amount of light provided to the plants, can substantially increase the yield in terms of additional growth. The wake up light essentially includes blue light and preferably only includes blue light. Further, best results are obtained with abaxial irradiation, though adaxial irradiation is herein not excluded. For instance, it was found that in vertical farming or well controlled greenhouses, it is possible to benefit from the use of such blue wake up light on the plant and inventors have observed that this will affect the biomass produced by leafy greens at the end of the growth cycle. Hence, herein a new dynamic lighting is proposed, especially for use as inter lighting and/or down lighting, to irradiate the leaves, especially the abaxial side of the leaves, during a short temporal period with blue light at a time of the beginning of a photoperiod and optionally at times when stomata stimulation is to be repeated. A wake up light using blue light will stimulate the (abaxial) stomata of the leaves for a short time. Such pulse may be short enough to not produce any stress on the plant, while simultaneously the photosynthetic light (red /blue or red/blue fared) may be applied to engage the photosynthesis machinery. Even more, using a light stimulation from underneath the canopy at several times in a day for a short time of ≤ 30 minutes will be much more efficient because a higher number of stomata will be stimulated by the light if irradiation is from underneath compared to from the top of the canopy. Photosynthetic light, can be used as usual, i.e. from the top of canopy ("adaxial") or inter canopy at different heights, to irradiate a maximum of leaf surface area for photosynthesis.

The invention is defined by the claims.

In a first aspect there is disclosed a horticulture lighting system ("lighting system"), comprising (i) a lighting device ("horticulture lighting device") configured to provide horticulture light ("light") and (ii) a control system ("controller") configured to control the lighting device to provide according to a predetermined time scheme and/or as function of a sensor signal a light pulse ("pulse") of (first) horticulture light in a spectral wavelength region at least comprising blue light during a light pulse period selected from the range of 1-60 min. In a further aspect, there is also disclosed a horticulture arrangement for plants, the horticulture arrangement comprising (i) a lighting device configured to provide (first) horticulture light, (ii) a control system (configured to control the lighting device (to provide the horticulture light)), and (iii) a support for support of the plants, wherein the control system is (further) configured to control the lighting device to provide according to a predetermined time scheme and/or as function of a sensor signal a pulse of (first) horticulture light in a spectral wavelength region at least comprising blue light during a pulse period selected from the range of 1-60 min. Herein the light pulse may also be indicated as "blue pulse" or "pulse of blue light" or "pulse of first horticulture light" or "pulse". Especially, the light pulse period precedes or at least partially overlaps a second period wherein second horticulture light is provided, and wherein the second period is longer than the light pulse period, such as e.g. at least twice as long. Hence, in specific embodiments the period of artificial and/or solar horticulture light following or overlapping the light pulse period is longer than the light pulse period, and this with respect to light in the spectral wavelength region at least comprising blue light. The horticulture light provided with the light pulse is herein also indicated as first horticulture light. The second horticulture light, which may be provided with the lighting device and/or may be based on solar light, is herein also indicated as second horticulture light. The terms "first period" or "light pulse period", or "horticulture light pulse period" and similar terms refer to the time period in which the pulse is provided. The terms "second period" or "second horticulture light pulse period" and similar terms refer to the time period in which the second horticulture light is provided. For a non-block shaped pulse, one may use the full-maximum half width to determine the period.

With such pulse of blue light, which may especially be provided at the beginning of the day of a day/night cycle or sometimes during the day (or at night), it appears that the plant is substantially stimulated. Such light appears to have a kind of catalyzing function, as the increase of biomass is much higher than could be expected only based on the additional photons provided during the pulse(s). The total amount of light (in photons) of the second horticulture light provided during the time of growth of the plant in a climate cell or farm may be at least 100 times, or even at least 1000 times larger than the accumulated number of photons provided in the pulse(s) in that same time. Hence, in an economic way horticulture growth may be improved.

The term "horticulture" relates to (intensive) plant cultivation for human use and is very diverse in its activities, incorporating plants for food (fruits, vegetables, mushrooms, culinary herbs) and non-food crops (flowers, trees and shrubs, turf-grass, hops, grapes, medicinal herbs). Horticulture is the branch of agriculture that deals with the art, science, technology, and business of growing plants. It may include the cultivation of medicinal plants, fruits, vegetables, nuts, seeds, herbs, sprouts, mushrooms, algae, flowers, seaweeds and non-food crops such as grass and ornamental trees and plants. Here, the term "plant" is used to refer essentially any species selected from medicinal plants, vegetables, herbs, sprouts, mushrooms, plants bearing nuts, plants bearing seeds, plants bearing flowers, plants bearing fruits, non-food crops such as grass and ornamental trees, etc.

Herein, the term "plant" is used for essentially all stages of cultivation. The term "plant part" may refer to root, stem, leaf, fruit (if any), etc..

The term "crop" is used herein to indicate the horticulture plant that is grown or was grown. Plants of the same kind grown on a large scale for food, clothing, etc., maybe called crops. A crop is a non-animal species or variety that is grown to be harvested as e.g. food, livestock fodder, fuel, or for any other economic purpose. The term "crop" may also relate to a plurality of crops. Horticulture crops may especially refer to food crops (tomatoes, peppers, cucumbers and lettuce), as well as to plants (potentially) bearing such crops, such as a tomato plant, a pepper plant, a cucumber plant, etc. Horticulture may herein in general relate to e.g. crop and non-crop plants. Examples of crop plants are Rice, Wheat, Barley, Oats, Chickpea, Pea, Cowpea, Lentil, Green gram, Black gram, Soybean, Common bean, Moth bean, Linseed, Sesame, Khesari, Sunhemp, Chillies, Brinjal, Tomato, Cucumber, Okra, Peanut, Potato, Corn, Pearlmillet, Rye, Alfalfa, Radish, Cabbage, Lettuce, Pepper, Sunflower, Sugarbeet, Castor, Red clover, White clover, Safflower, Spinach, Onion, Garlic, Turnip, Squash, Muskmelon, Watermelon, Cucumber, Pumpkin, Kenaf, Oilpalm, Carrot, Coconut, Papaya, Sugarcane, Coffee, Cocoa, Tea, Apple, Pears, Peaches, Cherries, Grapes, Almond, Strawberries, Pine apple, Banana, Cashew, Irish, Cassava, Taro, Rubber, Sorghum, Cotton, Triticale, Pigeonpea, and Tobacco. Especial of interest are tomato, cucumber, pepper, lettuce, water melon, papaya, apple, pear, peach, cherry, grape, and strawberry.

The term "plant" herein may especially refer to Archaeplastida. The Archaeplastida are a major group of eukaryotes, comprising the red algae (Rhodophyta), the green algae, and the land plants, together with a small group of freshwater unicellular algae called glaucophytes. Hence, in embodiments the term "plant" may refer to land plants. In embodiments the term "plant" may (also) refer to algae (such as one or more of green algae and red algae and unicellular algae called glaucophytes).

Especially, the disclosed horticulture lighting systems, horticulture arrangements and methods for irradiating plants may be of interest for short day plants (rucola, baby leaf spinach, ornamental plant (such as anthuriums, orchids, chrysanthemum), essentially all herbs (such as dill, basil, parsley, coriander, Poinsettia) or any plants which photoperiod need to be kept short to avoid flower initiation (when this is particularly not wanted such as in leafy vegetables). Further, they may especially be of interest for high wire plants, i.e. plants that grow along a wire or other vertical support. Hence, in embodiments the plant may be selected from the group of a tomato plant, a cucumber plant, a bell pepper plant, an aubergine plant, etcetera. In yet further, the plant comprises a plant selected from the group of leafy green plants.

The term "horticulture light" especially refers to light having one more wavelengths in one or more of a first wavelength region of 400-475 nm and a second wavelength region of 625-675 nm. The relative energies (watt) of the light from these regions included in the horticulture light may depend upon the type of plant and/or the growth phase. Hence, a recipe may define the ratio, optionally as function of time, for one or more types of plants, of light in the first wavelength region of 400-475 nm versus light in the second wavelength region of 625-675 nm. Especially, the term "horticulture light" may refer to light having wavelengths in the PAR region (the photosynthetically active region from 400-700 nm). The term "horticulture light" may also be used for light that is applied to plants in hydroponic applications. As known in the art, in the PAR region (the photosynthetically active region from 400-700 nm) the reflection coefficient of leaves is very low (5-10 %). Towards the near infrared, beyond 700 nm, the reflection coefficient increases. In specific embodiments, the horticulture light, may in addition to PAR light also include a small fraction (< 20% of the power, especially about at maximum 10% of the power) far red, i.e. 700-850 nm.

The above applies to (artificial) horticulture light in general. Herein, it is distinguished between first horticulture light, also sometimes indicated herein as "horticulture light" without the prefix "first", and second horticulture light. The former relates especially to the (wake up) pulse; the latter to horticulture light that maybe provided anyhow for photosynthesis or other plant processes, according to e.g. a predefined scheme. Light or daylight provided by the sun which intrinsically complies to a predefined day-night rhythm or scheme and may be controlled using for example blinds or shades may herein also be indicated as second horticulture light, at least in embodiments wherein the plants are exposed to such solar light.

Especially, the horticulture lighting system is able to provide at least blue light (for the wake up pulse). Thus the first horticulture light, i.e. the light provided during the wake up pulse, especially comprises blue light. The second horticulture light may especially have light of one more wavelengths in one or more of a first wavelength region of 400-475 nm, a second wavelength region of 625-675 nm, and a third wavelength range of 700-850 nm, such as (at least) 700-800 nm. As further indicated below, the spectral distribution of the first horticulture light and second horticulture light are generally different, though in specific embodiments they may essentially be the same. Solar light may also be used and indicated as (second) horticulture light. Artificial horticulture light may also be used and indicated as (second) horticulture light and essentially consist of light in one or more in the wavelength ranges identified above.

The lighting system especially comprises a lighting device for providing the (second) horticulture light and at least for providing the pulse. The lighting system further comprises a control system. This lighting control system is configured to control the light output from the lighting device, generally indicated as lighting device light and herein also indicated as horticulture light. As indicated above, and elsewhere herein, the lighting system may be part of or configured in a horticulture arrangement. Such horticulture arrangement may include a horticulture control system to control one or more parameters for growing the plants. In embodiments, a horticulture control system may also include the functionality of the lighting control system to control the the lighting device.

The term "horticulture arrangement" may refer to a plant factory or climate cell, wherein the plants are grown under controlled conditions, and wherein the plants substantially do not receive daylight. Such plant factory may be climatized, such as in the case of a climate cell. Hence, in some embodiments the horticulture arrangement is in such plant factory or climate cell, while in other embodiments the horticulture arrangement is only partially included in such plant factory or climate cell. For instance, the horticulture arrangement may have a plant support and lighting system included in a climate cell and the control system configured external from the climate cell.

Although embodiments of a horticulture arrangement may refer to a plant factory or climate cell, the use of daylight, herein also indicated as solar light, is not necessarily excluded. The disclosed horticulture lighting systems, horticulture arrangements and methods for irradiating plants may also be applied in a greenhouse or other configuration wherein daylight may be received by the plants in the greenhouse or the other configuration. Also in e.g. a greenhouse a lighting arrangement may be configured that provides once a day, especially when the day starts (such as at dawn, see also below), and/or some other time during the day when stomata stimulation is preferred, a blue pulse. The horticulture lighting systems, horticulture arrangements and methods for irradiating plants may also be applied in a growing tunnel (also indicated as "low tunnels"), which are in general of a flexible light transmissive polymeric material.

Hence, the wake up pulse may be applied in combination with only artificial light (i.e. the plants only receive artificial light), in combination with only solar light (such as plant in some greenhouses, or low tunnels), but may also be applied in arrangements wherein both artificial light and solar light may be applied. For instance, the wake up pulse may also be used for plants growing without additional supplemental lights in an arrangement, such as in a greenhouse, or in embodiments wherein artificial light is reduced or even switched off, e.g. in spring or summer when there is enough solar light.

The wake up pulse may in embodiments be synchronized with the sunrise. Therefore, in embodiments the control system may also be configured to control the horticulture light, especially the wake up pulse, in response to a sensor signal of a daylight sensor and/or in relation to a predefined scheme which scheme takes into account solar intensity as function of the time of the day. Hence, in specific embodiments the pulse of blue light may be provided preceding, partially overlapping or entirely overlapping a period wherein (second) horticulture light is provided and wherein the period of said (second) horticulture light is longer than the pulse period. The period of said (second) horticulture light may be (part of) the day period of an artificial or diurnal day/night cycle. The (second) horticulture light may be provided with one or more of a sodium lamp, especially a high pressure sodium lamp (HPS), solar light, and a solid state light source. The pulse of blue light is especially provided with a solid state light source.

In embodiments, the phrase "wherein the light pulse period precedes or at least partially overlaps a second period of second horticulture light, and wherein the second period is longer than the light pulse period" and similar phrases may thus also refer to "wherein the light pulse of artificial horticulture light precedes or is provided during a second period of artificial and/or solar (second) horticulture light, and wherein the (second) period of artificial and/or solar (second) horticulture light is longer than the light pulse period". For instance, in embodiments the wake up pulse of artificial (first) horticulture light precedes or is provided during a (second) period of solar (second) horticulture light, and the (second) period of (second) horticulture light is longer than the wake up pulse period. In other embodiments, the wake up pulse of artificial (first) horticulture light, such as provided by solid state light sources, precedes or is provided during a (second) period of artificial (second) horticulture light, such as provided by solid state light sources, and the (second) period of (second) horticulture light is longer than the wake up pulse period.

Phrases like a pulse period "preceding or during" or "preceding or simultaneously" or "preceding or at least partially overlapping" a second period, and similar phrases, especially indicate in embodiments that the pulse starts of ends in a period from 0.5 h before to 0.5 h after the start of the second period i.e. the commencement of (second) horticulture light such as when switching from a night to a day. Hence, the terms "preceding" or "during" may also refer where part of the pulse precedes the (second) horticulture light period or where part of the pulse is during the (second) horticulture light period. In embodiments, the period of (second) horticulture light (not including the pulse) is longer than the pulse period, especially at least 2 times the time length of the pulse period, such as at least 4 times. For instance, the pulse may be 10-40 minutes and the (second) horticulture lighting period may be at least 4 hours, such as at least 8 hours.

The intensity, especially the intensity of blue light, during the period of (second) horticulture light is smaller than during the pulse period, such as at maximum 75% of the light intensity (in µmol/m²/s) provided during the pulse period (see also below). Further, the spectral distribution of the wake up light during the light pulse period and the spectral distribution of the (second) horticulture light during the second period maybe different, with a ratio of the total number of photons in the blue, especially in the range of 425-475 nm, relative to the total number of photons in the PAR and far red in the wake up light being higher than such ratio in the (second) horticulture light, such as at least 1.1 times the latter ratio, like at least 1.2 times, such as at least 1.5 times. For instance, the second horticulture light may in embodiments have a ratio blue:red of b:r, wherein b and r are the intensities of blue and red in µmol/sec/m² , which ratio may e.g. be 1:7 (with red and blue wavelengths ranging from 625-675 nm and from 400-475 nm respectively), and the wake up light may have a ratio blue:red of n*b:r, wherein n is at least 1.1, such as at least 1.2, like at least 1.5, such as at least 2. In specific embodiments, the first horticulture light essentially consists of (only) blue light.

In embodiments the light pulse may have the same spectral distribution as the second horticulture light in the (second) horticulture lighting period, but with a (substantially) higher intensity. Hence, in specific embodiments the pulse of first horticulture light, i.e. the wake up light pulse, may be obtained by a temporary increase in intensity of the second horticulture light (assuming the latter thus includes blue light). In further embodiments, the spectral distribution of the horticulture light during the pulse period may differ from the spectra distribution of the (second) horticulture light during the second period, with the pulse having relatively more blue light than the second horticulture light or having essentially only blue light and the second horticulture light during the second period at least also having red light and/or far red light and having relatively less blue light intensity than the first horticulture light. The second period of second horticulture light may especially be used for photosynthesis, and the pulse is especially used to promote or catalyze this photosynthesis process due to its wake up function.

Hence, in embodiments the control system (of the horticulture arrangement or the horticulture lighting system) is configured to provide the light pulse preceding to, partially overlapping with or simultaneously with a period wherein the plants receive second horticulture light for stimulating photosynthesis. This horticulture light for stimulating photosynthesis especially comprises PAR and optionally far red. Further the horticulture light for stimulating photosynthesis may be received by the plants from the sun (i.e. naturally) and/or may be provided by one or more lighting devices of the horticulture arrangement or the horticulture lighting system, dependent upon the type of application. The pulse of blue light may especially be provided abaxial and/or adaxial, especially at least abaxial. The horticulture light for stimulating photosynthesis may especially be provided at least adaxial.

As indicated above, the control system is configured to control the lighting device to provide according to a predetermined time scheme and/or as function of a sensor signal a light pulse of (first) horticulture light. The term "sensor" may also relate to a plurality of different sensors, such as a sensor to sense a plant parameter (see below) and a sensor to measure daylight, etc.. Hence, the term "sensor signal" may also refer to a plurality of sensor signals of different sensors. The lighting device may also provide at least part of the second horticulture light, in specific embodiments such as in closed plant farms essentially all of the second horticulture light. Therefore, in embodiments the control system may also be configured control the horticulture lighting device to provide according to the predetermined time scheme and/or as function of the sensor signal second horticulture light during a second period. The second period may be a follow-on of the light pulse period or may at least partly coincide in time with the light pulseperiod. Especially, the intensity of the (second) horticulture light during the second period is smaller than the intensity of the (first) horticulture light during the pulse period, such as at maximum 75% of the light intensity (in µmol/m²/s) provided during the pulse period. Hence, the control system may especially be configured to provide a pulse of additional horticulture light, even more especially having additional light in the blue wavelength range or substantially only light in the blue wavelength range, on top of other (second) horticulture light. Outside the pulse period, the (second) horticulture light may also provide one or more of red and far red.

In use, the arrangement may include a plant support with a plant, or a plant support with a seed, or a plant support with a seedling, etc.. The terms "support" or "plant support" may refer to one or more of (particulate) substrate, aqueous substrate for use in hydroponics, soil, wire for wire crops, etc., which can be used to grow plants in, on, or along, etc.

The control system of such horticulture arrangement, also referred to herein as horticulture control system, may control one or more of temperature, humidity, irrigation, nutrient supply, light intensity of the horticulture light, air conditions including one or more of air temperature, air composition such as CO₂ concentration, air flow, etc.. Such horticulture control system may be configured to control one or more of these conditions at different locations in the horticulture arrangement. Hence, the irradiation with first (and optionally second) horticulture light may in embodiments be controlled in response to e.g. one or more of time of the day, season of the year, (local) lighting conditions, age of plant, condition of the plant, planting period, etc.. So, the irradiation with horticulture light in general, or first (and optionally second) horticulture light in particular, may in embodiments be controlled in response to plant related data, time related parameters, conditions to which the plant is subjected (such as natural light, temperature, gas composition, feed, etc. etc.), etc..

The horticulture lighting system is especially configured to provide first and optionally second horticulture light to plants. In embodiments, this may especially imply that the horticulture lighting system is configured to provide said first and optionally second horticulture light in a direction of a area where plants may grow. Such area may be a tray. Especially, the above defined term "plant support" may also refer to a tray for receiving a substrate for growing plants in/on or a plurality of of such trays, as the plants may be grown in layers one above the other. Hence, racks each with two or more plant supports and associated lighting systems are considered. The term "lighting system" may therefore also refer to a plurality of (possibly individually controllable) lighting systems.

The control system of the horticulture arrangement or horticulture lighting system is configured to control a light intensity of the first, and optionally second, horticulture light. The term "controlling" and similar terms especially refers to exercising restraining or directing influence over an element. The term "controlling" and similar terms may also refer to supervising or monitoring the operation of an element. Hence, herein "controlling" and similar terms may e.g. refer to measuring, displaying, actuating, opening, shifting, changing temperature, etc.. The phrase "a light intensity of the horticulture light" may refer to the strength or amount of horticulture light produced by a lighting device and is a measure of the wavelength-weighted power emitted by the lighting device. In specific embodiments the control system may also be configured to control the spectral power distribution of emitted light, e.g. reducing or increasing parts of the spectral power in some wavelengths relative to other wavelenghts.

The conditions to which the (growing) plants are subjected are in general defined in a growth recipe. Hence, the control system may grow the plants according to a growht recipe. Such growth recipe may include a light recipe, which defines a horticulture light intensity and spectrum. This may imply that the recipe defines a horticulture light intensity and spectrum over time. Alternatively or additionally, the light recipe may define a horticulture light intensity and spectrum as function of parameters that are sensed, like intake of nutrients, leaf size, plant temperature, leave temperature, root temperature, stem length, fruit size, etc. etc. Other parameters may also be sensed, such as one or more of temperature (in the greenhouse, farm, climate cell, tunnel, etc.), humidity, gas composition. Also the daylight intensity (in csae also solar light is applied) may be a parameter sensed.

On top of such light recipe, which defines the (second) horticulture light intensity and spectrum for growing a plant, the control system may be configured to additionally provide the wake up pulse. Further as indicated above, for other applications, such as e.g. greenhouse, it may even be possible that the sole function of the control system is to control the generation of the wake up pulse, though in other embodiments also further (second) horticulture lighting may be controlled.

The horticulture lighting system comprises a lighting device which is especially used to provide the (first and optionally second) horticulture light. The term "horticulture light" especially refers to the light that is provided by the system (during use of the system) and which can be provided to one or more parts of the plant. The term "light" especially refers to visible light, but may in embodiments also refer to one or more of UV radiation and infrared radiation. The light generation device is especially a solid state lighting device. Further, the term "light generation device" may also refer to a plurality of (different) light generation devices. The lighting device(s) may optionally be color tunable. Hence, especially the lighting device comprises a plurality of solid state light sources, such as LEDs, which can be independently controlled, or wherein subsets of different solid state light sources in terms of spectral light output can independently controlled.

The horticulture lighting system and/or the lighting device are at least configured to provide blue light, in view of the wake up pulse that has to be generated. Optionally, the wake up light may also include other colors of light, such as red or far red, but especially, at least 50% of the photons are in the blue spectral region, even more especially at least 70%, such as at least 80%, like at least 90%. Herein, the term "blue light" especially refers to light having a wavelength, even more especially having a centroid wavelength in the range of 400-495 nm. Even more especially, the pulse of blue light includes light having a wavelength selected from the range of 425-475 nm. Hence, in specific embodiments blue light is provided having a centroid wavelength selected from the range of 425-475 nm.

As indicated above, the control system is configured to control the first, and optionally second, horticulture light. This may in embodiments (see also above) imply that the control system essentially only provides the wake up pulses, but may in other embodiments imply that the control system is configured to control essentially all lighting that is used to irradiate the plants, i.e. both the first and second horticulture lighting. Especially in plant factories, essentially all light received by the plants is artificial lighting, in which case the control system may control both the first and second horticulture light that is received by the plants.

The control system is thus further configured to provide a pulse of (first) horticulture light. As indicated above, this pulse of light may essentially be in the blue region. Further, the pulse is limited in time. Hence, there may be a relatively short increase in intensity during a limited time, such as 1-60 minutes, like 5-50 minutes, such as at least 10 minutes, like 10-40 minutes. In general, the pulse will be a single pulse. However, in other embodiments a train of (sub)pulses may be provided. The entire train of (sub)pulses is referred to herein as the pulse, and should thus take place in the indicated pulse period. Further, if a train of (sub)pulsed would be applied, a duty cycle of the train of (sub)pulses is at least 40%.Preferably, especially a single integral wake up pulse is applied. In embodiment however, a number of pulses per day may be applied. The number of blue pulses per day (24 h) may e.g. be in the range of 1-6 pulses, such as 1-4 pulses.

The pulse is provided according to a predetermined time scheme and/or as function of a sensor signal. With respect to the predetermined time scheme, this may especially refer to a wake up pulse at the beginning of the day. This will further be explained below. With respect to the sensor signal, this may especially refer to a sensor that is configured to monitor e.g. growth or an enviromental condition or a plant parameter of the plant. This will further be explained below. Would it appear desirable to provide a boost or 'wake up call' to the plants, a pulse as disclosed herein may be provided, which may in embodiments be accompanied or essentially directly followed with a change in other conditions, such as a (second) horticulture light intensity, (second) horticulture light spectral distribution, temperature change, nutrient supply, etc.. In embodiments, characteristics of the pulse may be determined according to a predetermined time scheme and as function of a sensor signal. For example, the predetermined time scheme may be based on a diurnal cycle including a time of dawn which is senses with an ambient light sensor. As another example, the time of applying the pulse may be based a predetermined time scheme but the duration, intensity and/or spectrum may be determined based on sensor signals. In another example, time and/or duration of the pulse may be selected based on a predetermined time scheme of photoperiods in a growth recipe and the intensity and/or spectrum of the pulse may be determined based on sensed plant or growth parameters.

The term "pulse" is used herein to indicate that there is a relative sudden increase and also decrease in the intensity of blue light associated with the pulse. This does not necessarily imply that before and/or after the pulse the lighting system does not provide any blue light, but that during the pulse, there is substantial additional blue intensity. Hence, in embodiments the pulse has an average intensity of n µmol/m²/s photons across the pulse period and at least during a 0.5 h period preceding and a 0.5 h period following to the pulse, the average intensity of the second horticulture light in the same spectral region as the pulse are each at maximum 0.75*n µmol/m²/s photons. In further embodiments, during a period of at least 1 h, such as at least 2 hours, such as 2-4 hours, like at least four hours, like 4-8 hours, preceding the pulse, the average intensity of the second horticulture light in the same spectral region as the pulse is at maximum 0.75*n µmol/m²/s photons, such as at maximum 0.5*n µmol/m²/s photons, like at maximum 0.1*n µmol/m²/s photons, such as at maximum 0.05*n µmol/m²/s photons. The preceding time may even be an essentially dark period, such as e.g. during the night. In further embodiments, during a period of at least 1 h, such as at least 2 hours, such as 2-4 hours, like at least four hours, like 4-8 hours, following the pulse, the average intensity of the second horticulture light in the same spectral region as the pulse is at maximum 0.75*n µmol/m²/s photons, such as at maximum 0.5*n µmol/m²/s photons. In specific embodiments, wherein the pulse is provided preceding or during a period of horticulture light, during a period of at least 1 h, such as at least 2 hours, such as 2-4 hours, like at least four hours, like 4-8 hours, following the pulse, the average intensity of the second horticulture light in the same spectral region as the pulse is at minimum 0.1*n µmol/m²/s photons, such as at minimum 0.2*n µmol/m²/s photons.

Hence, as disclosed herein, there may be provided a relatively short pulse of (first) horticulture light preceding or at the beginning of a (second) period of (second) horticulture light, the horticulture light in the pulse period, especially in the blue spectral region, has a substantially higher intensity than in the horticulture light in the (second) period excluding the pulse. In embodiments, the light intensity of the (second) horticulture light (including PAR and optionally far red) is on average across the (second) horticulture lighting period at maximum 0.75*n µmol/m²/s photons of the light intensity of the (first) horticulture light in the pulse period.

Herein, the phrase "in the same spectral region" is used when comparing light intensities of different types of horticulture light. Especially, as disclosed herein, the spectral region for which intensities are compared refers to the blue wavelenght range. This does not exclude embodiments wherein there is a basic level (which may be time varying) of light having wavelengths other than in the indicated blue region present as (second) horticulture light or other environmental light. Hence, especially the invention relates to embodiments wherein a blue pulse is provided, irrespective of the presence of light in the green, yellow, orange, red, and far red.

The specific pulse conditions may depend upon the type of plant. However, as indicated above the pulse period may be in the range of 1-60 minutes, such as in specific embodiments 10-40 minutes. Further, the light intensity of the pulse of light is especially (on average) at least 5 µmol/m²/s photons. However, the intensity should not be too high in order to prevent detrimental effects on the plant. Therefore, also the time period of the blue pulse should not be too long. Hence, in specific embodiments the control system is configured to provide during a pulse period selected from the range of 10-40 min a pulse with an (average) intensity of 10-70 µmol/m²/s photons.

The light energy included in the pulse (also referred to as the pulse "dose") may depend upon the actually grown type of plant. However, it appears that a minimum dose of about 5,000 µmol/m² photons may already be useful. Hence, in embodiments the control system is configured to provide during the pulse period a dose of 20,000-100,000 µmol/m² photons. As used herein, the intensity in "µmol/m²/s photons" may also be indicated as irradiance. The dose in "µmol/m² photons" may also be indicated as radiant exposure or radiant fluence.

In embodiments, the pulse may be a provided preceding or at a stage wherein the (second) horticulture light intensity is increasing or scheduled to increase. Therefore, in embodiments the control system is configured to provide the (first) horticulture light based on a predefined scheme, wherein the scheme includes a high intensity period with more or increasing (artificial and/or solar) (second) horticulture light intensity alternated with a low intensity period with no, less or reduced (artificial and/or solar) (second) horticulture light intensity, and wherein the control system is configured to provide the pulse of (artificial) horticulture light within a time period from 0.5 h preceding and 0.5 h following a first time defined as the time upon which the high intensity period in the scheme commences. In this embodiment, the high intensity period and low intensity period are each at least an hour and a time averaged intensity of the second horticulture light during the low intensity period is at maximum 50% of a time averaged intensity of the second horticulture light during the high intensity period. Note that in this paragraph, and elsewhere herein in the same context, the terms low and high intensity period now refer to a period witin a time scheme of the second horticulture light. The time scheme may be defined by the control system and/or may be dependent upon the diurnal day and night rhythm. Especially, in closed systems with essentially only artificial light, the time scheme may be defined by the control system.

The term "low intensity period" may also imply an essentially dark period. The term "high intensity period" especially refers to a period wherein the intensity of the second horticulture light is higher than in the low intensity period.

Especially, the predefined scheme is based on a day-night rhythm created by the (artificial or solar) second horticulture light, and the control system is configured to provide the pulse at dawn. Therefore, in embodiments the pulse can be provided at the beginning of a photoperiod, generally known as a period in a daily cycle during which a plant is exposed to light. In further specific embodiments, when there are more photoperiods in a daily cycle, a pulse can be provided at the beginning of each photoperiod. The term "dawn" may refer to the astronomical dawn for systems that are essentially based on solar light to provide horticulture light (except for the pulse which is provided by artificial light). The term "dawn" may refer to the moment that light intensity is increased after an essentially dark period.

The pulse of (essentially blue) horticulture light may especially be provided with a horticulture lighting device that is controllable in terms of intensity and optionally in terms of spectrum. Hence, in embodiments the horticulture lighting device may be adapted to provide only the pulse of (essentially blue) horticulture light. In other embodiments, the horticulture lighting device may be adapted to provide the pulse of (essentially blue) horticulture light as well as the second horticulture light during the second period. However, also two or more (different) horticulture lighting devices may be applied, which, in use, may be arranged at different positions in the horticulture arrangement. Hence, the term "lighting device" may also refer to a plurality of (different) lighting devices.

Further, it appears beneficial that the blue light pulse is directed to the abaxial parts of the leaves of the plant. As not only blue light but also red and/or far-red light is useful for the growth of plants, a lighting system may especially be configured to irradiate the abaxial parts of the leaves with essentially blue light and irradiate the adaxial parts of the leaves with blue, red and/or far-red light. In specific embodiments the horticulture lighting system or horticulture arrangement comprises a first lighting device and a second lighting device, wherein the first lighting device is configured to provide at least blue horticulture light, and wherein the second lighting device is configured to provide horticulture light having one or more wavelengths selected from one or more wavelength ranges selected of the group consisting of (i) 625-675 nm and (ii) 700-850 nm (such as especially (at least in the range of) 700-800 nm). The horticulture lighting system may then be configured to provide the pulse of (first) horticulture light with the first lighting device and the second horticulture light with the first lighting device and/or the second lighting device.

As indicated above, the pulse may also be provided on the basis of a sensor signal. Likewise, in specific embodiments the second horticulture light may be provided on the basis of a sensor signal.

For instance, an (optical) sensor maybe applied to measure one or more the opening of the stomata, the condition of the stem (strong or weak), the condition of the leave (fresh/strong, or withered), the conditions of flowers and or fruit, etc... For instance, a sensor may be used to measure root temperature, or stem temperature or leaf temperature, O₂ excretion, CO₂ concentration, ethane concentration, etc..

Based on a criterion, a sensor signal may be used to determine whether or not a blue pulse has to be provided, or whether an additional blue pulse has to be provided. Also the length and/or intensity of the pulse maybe deterermined based on one or more sensor signals from (different) sensors. Likewise, in specific embodiments and based on a criterion, a sensor signal may be used to determine whether or not second horticulture light has to be provided, or whether additional second horticulture light has to be provided. Also the length and/or intensity of the second horticulture light period maybe determined based on one or more sensor signals of (different) sensors.

Therefore, in specific embodiments the horticulture lighting system and/or the horticulture arrangement may further comprising a sensor, wherein the sensor is configured to monitor a parameter of a plant, a growth condition and/or an environmental condition such as a paramter of the available daylight, and to provide a corresponding sensor signal, and wherein the control system is configured to provide the pulse according to a predetermined relation between sensor signal and (first) horticulture lighting properties. Likewise, in further specific embodiments the horticulture lighting system and/or the horticulture arrangement may further comprising a sensor, wherein the sensor is configured to monitor a parameter of a plant, a growth condition and/or an environmental condition such as a parameter of the available daylight, and to provide a corresponding sensor signal, and wherein the control system is configured to provide the second horticulture light according to a predetermined relation between sensor signal and second horticulture lighting properties.

Horticulture lighting properties may e.g. include one or more of intensity (as function of time), spectral distribution (as function of time), etc. When horticulture light is provided from artificial lighting devices, a horticulture lighting property may further include a duration of horticulture lighting, a duty cylcle of the horticulture lighting, etc. The term "horticulture lighting property" may thus refer to a repetition rate of period(s) of second horticulture light as well as the duration of (each) such period(s) and/or the light intensity and spectrum of second horticulture light of (each) such period(s). Further, the term "horticulture lighting property" may refer to the duration of the light pulse period, the spectral distribution of the (blue) light provided and the intensity of the pulse. By varying the length of the (pulse) period and/or the intensity in µmol/m²/s the total number of photons can be controlled (e.g. in µmol/m²).

When e.g. based on the sensor signal the control system determines that the plant generates biomass in accordance with a predefined scheme, the lighting parameters of the pulse such as pulse duration (pulse width), pulse maximum intensity and pulse spectral distribution, may be kept constant; likewise, the frequency with which the pulse is provided may be kept constant. When e.g. based on the sensor signal the control system determines that the plant generates biomass slower than a predefined scheme, one or more lighting parameters of the pulse such as pulse duration (pulse width), pulse maximum intensity or pulse spectral distribution, may be changed, especially such that more blue photons may be provided; likewise, the frequency with which the pulse is provided may optionally be increased. When e.g. based on the sensor signal the control system determines that the plant generates biomass faster than a predefined scheme, one or more lighting parameters of the pulse such as pulse duration (pulse width), pulse maximum intensity or pulse spectral distribution may be changed, especially such that less blue photons may be provided; likewise, the frequency with which the pulse is provided may optionally be decreased. In a similar way, lighting parameters of the second horticulture light during the second period may be kept constant, increased or decreased. In general, however, the number of lighting periods during a daily cycle may in embodiments be kept constant. The second horticulture light provided (or received) during the second period may especially be used for (stimulating) photosynthesis. The blue pulse is especially used to catalyze or boost this photosynthesis process.

As indicated above, the horticulture arrangement may thus comprise a horticulture lighting system for horticulture lighting. Herein, the horticulture arrangement is especially explained in relation to a facility wherein plants are present for growing. However, the horticulture arrangement may also be the facility itself i.e. without plants being present. All embodiments in relation to the horticulture lighting system also apply to the horticulture arrangement comprising such lighting system. A few specific embodiments and/or additional embodiments are further defined below.

As indicated above, especially the pulse of blue light includes light having a wavelength selected from the range of 425-475 nm. Further, especially the pulse has an average intensity of n µmol/m²/s photons over the pulse period and during at least 0.5 h preceding and at least 0.5 h following to the pulse, the average intensity of the second horticulture light in the same spectral region as the blue light of the pulse is each at maximum 0.75*n µmol/m²/s photons.

In specific embodiments, the lighting device is configured to provide the (first) horticulture light with an optical axis (O) having an angle (α) selected from the range -135° to 135° relative to a vertical. This especially refers to the horticulture light that includes the blue pulse. As indicated elsewhere, light may also be provided from above. The "vertical" may also be indicated as vector point upwards; the optical axis may also be indicated as the vector indicating the path along which light propagates from the lighting device. An angle of 0° relative to the vertical is light that is directed upwards. Angles of (-)90° refers to light that is directed horizontal. Even beyond the horizontal, when pointing to some extension downwards from a lighting device configured above the support, it may lead to an irradiation of the abaxial part of the leaves. Especially, the lighting device that is configured to provide the pulse is directing its light upwards and/or (essentially) sidewards.

Therefore, in specific embodiments the horticulture arrangement (or horticulture lighting system) may comprise a first lighting device and a second lighting device, wherein the first lighting device is configured to provide at least blue horticulture light, and wherein the horticulture lighting arrangement (or horticulture lighting system) is configured to provide the pulse with at least the first lighting device, and wherein the second lighting device is configured to provide at least second horticulture light, especially having one or more wavelengths selected from one or more wavelength ranges selected of the group consisting of (i) 625-675 nm and (ii) 700-850 nm (such as especially (at least in the range of) 700-800 nm), wherein the first lighting device is arranged as one or more of uplighter and side lighter (such as for providing the (first) horticulture light with an optical axis (O) (as vector showing the direction of the first horticulture light) having an angle (α) selected from the range -135° to 135° relative to a vertical (pointing upward)), and wherein the second lighting device is arranged as one or more of side lighter and down lighter. In embodiments the horticulture arrangement (or horticulture lighting system) may include only the first lighting device. Especially, the horticulture arrangement (or horticulture lighting system) may comprise both the first lighting device and the second lighting device.

In a further specific embodiment, the control system of the horticulture arrangement is further configured to provide an elevated CO₂ concentration at least during the light pulse period, wherein the CO₂ concentration is elevated relative to the CO₂ concentration during a period preceding the pulse and/or a period wherein the plants receive the second horticulture light (for stimulating photosynthesis). To this end, the horticulture arrangement may further comprise a device for providing CO₂, such as a CO₂ gas or a gas having a higher CO₂ concentration than air. After the light pulse, the CO₂ concentration may be reduced again, such as to the CO₂ concentration before the light pulse or a CO₂ concentration suitable for photosynthesis. In this way, the plants maybe temporarily subjected to an elevated CO₂ concentration, during at least part of the light pulse period.

The horticulture arrangement, or the horticulture lighting system, may be used in a method for providing horticulture light to plants. Therefore, in yet a further aspect, there is disclosed a method of providing (first) horticulture light to plants in a horticulture arrangement, especially as defined herein, the method comprising providing - according to a predetermined time scheme and/or as function of a sensor signal - a light pulse of horticulture light in a spectral wavelength region at least comprising blue light during a light pulse period selected from a range of 1-60 min. Especially, the light pulse period precedes or at least partially overlaps a second period of second horticulture light, wherein the second period is longer than the light pulse period.

As indicated above, such method may be used in combination with the herein described horticulture arrangement or horticulture lighting system.

Many of the embodiments indicated in relation to the horticulture lighting system and/or horticulture arrangement may also apply to the method of providing horticulture light. Some specific embodiments are further elucidated below.

Especially, a method is provided wherein the pulse of blue light includes light having a wavelength selected from the range of 425-475 nm. Further, in embodiments, the light pulse period may especially be selected from the range of 10-40 minutes and a pulse intensity may be selected from the range of 10-70 µmol/m²/s photons. In further specific embodiments, the method further comprises providing during the pulse period dose of 20,000-100,000 µmol/m² photons (of the first horticulture light).

As can be concluded from the above, the method may further also comprise providing the second horticulture light according to a predefined scheme wherein a high intensity period with more or increasing second horticulture light intensity alternates with a low intensity period with no, less or reducing second)horticulture light intensity, and wherein the method further comprises selecting the pulse within a time period of 0.5 h preceding and 0.5 h following a first time, defined as the time wherein a period with more or increasing second horticulture light intensity commences, wherein especially the high intensity period and low intensity period are each at least an hour, and wherein a time averaged intensity of the second horticulture light during the low intensity period is at maximum 50%, such as at maximum 20%, of a time averaged intensity of the second horticulture light during the high intensity period.

In yet further embodiments, the pulse (in the spectral wavelength region at least comprising blue light) is directed to the leaves, especially an abaxial part of leaves of the plant.

Herein, directing light may be achieved by arranging a light emitting surface of the lighting device in the desired direction. Directing light may also be achieved by using optics, such as one or more of a reflector and a waveguide.

As indicated above, the blue pulse may be provided in relation to a predefined scheme and/or on the basis of a signal of a sensor. Therefore, in yet further embodiments the method may further comprise monitoring a parameter of a plant, a growth condition and/or an environmental condition and providing the pulse according to a predetermined relation between a monitored parameter and/or condition and a horticulture lighting property of one or more of the light pulse of (first) horticulture light and the second horticulture light, especially of the first horticulture light. Likewise, second horticulture light may be provided in relation to a predefined scheme and/or on the basis of a signal of a sensor. Therefore, in yet further embodiments the method may further comprise monitoring a parameter of a plant, a growth condition and/or an environmental condition and providing the second horticulture light according to a predetermined relation between a monitored parameter and/or condition and horticulture lighting property of the (first) horticulture light, and optionally also of the second horticulture light if for example second horticulture light is partially provided from solar light.

In yet a further embodiment, CO₂, such as a CO₂ pulse, may be provided essentially coinciding with the light pulse. An increased CO₂ concentration (at the plant) during the time of the pulse may further increase the growth and yield (biomass production). Hence, in embodiments the control system of the horticulture arrangement is further configured to provide an elevated CO₂ concentration at least during the light pulse period, wherein the CO₂ concentration is elevated relative to the CO₂ concentration preceding the light pulse. For instance, an average CO₂ concentration (at the plant) during 0.5 h preceding the light pulse may be lower than average CO₂ concentration (at the plant) during the light pulse, such as at least 10% lower, such as at least 20% lower. A device may be used to provide the CO₂, for instance locally, to the plants.

The method maybe run on a computer functionally coupled or comprised by the horticulture lighting system or horticulture arrangement. Therefore, there is further provided a computer program enabled to carry out the method as defined herein, for instance when loaded on a computer. In yet a further aspect, this disclosure provides a record carrier (or data carrier, such as a USB stick, a CD, DVD, etc.) storing a computer program according to claim. Hence, the computer program product, when running on a computer or loaded into a computer, brings about, or is capable of bringing about, the method as described herein. Therefore, a further aspect disclosed herein provides a computer program product, when running on a computer which is functionally coupled to or comprised by a horticulture lighting system, especially as defined herein, or a horticulture arrangement, especially as defined herein, (and thus) comprising such horticulture lighting system, is capable of bringing about the method as described herein.

The record carrier or computer readable medium and/or memory may be any recordable medium (e.g., RAM, ROM, removable memory, CD-ROM, hard drives, DVD, floppy disks or memory cards) or maybe a transmission medium (e.g., a network comprising fiber-optics, the world-wide web, cables, and/or a wireless channel using, for example, time-division multiple access, code-division multiple access, or other wireless communication systems). Any medium known or developed that can store information suitable for use with a computer system may be used as the computer-readable medium and/or memory. Additional memories may also be used. The memory may be a long-term, short-term, or a combination of long- and-short term memories. The term memory may also refer to memories. The memory may configure the processor/controller to implement the methods, operational acts, and functions disclosed herein. The memory may be distributed or local and the processor, where additional processors may be provided, may be distributed or singular. The memory may be implemented as electrical, magnetic or optical memory, or any combination of these or other types of storage devices. Moreover, the term "memory" should be construed broadly enough to encompass any information able to be read from or written to an address in the addressable space accessed by a processor. With this definition, information on a network, such as the Internet, is still within memory, for instance, because the processor may retrieve the information from the network.

The controller/processor and the memory may be any type. The processor may be capable of performing the various described operations and executing instructions stored in the memory. The processor maybe an application-specific or general-use integrated circuit(s). Further, the processor may be a dedicated processor for performing in accordance with the present system or may be a general-purpose processor wherein only one of many functions operates for performing in accordance with the present system. The processor may operate utilizing a program portion, multiple program segments, or may be a hardware device utilizing a dedicated or multi- purpose integrated circuit. Herein, the terms "configured to", "adapted to" or similar terms mean arranged, designed, construed or set up to operate especially in a particular way. In the case of control system or controller, such arrangement, design, construction or set up maybe realized in software (in case of e.g. a programmable controller/processor), hardware (in case of e.g. a color or intensity controllable lighting device) or a combination of hard- and software.

In this disclosure, the feature "control system configure to control a lighting device" or similar implies those features that a skilled person in lighting controls would know are needed to realize such feature, such as e.g. program code to operate one or more (micro)processors, I/O drivers to input/output data to/from the processor, interfaces to connect with a wired or wireless communication means to communicate control data from a processor to a lighting device and vice versa, etc.

### BRIEF DESCRIPTION OF THE DRAWINGS

Embodiments will now be described, by way of example only, with reference to the accompanying schematic drawings in which corresponding reference symbols indicate corresponding parts, and in which:
Fig. 1 schematically depicts an embodiment of the horticulture lighting system and the horticulture lighting arrangement;
Fig. 2 shows stomatal opening in % distribution (S) as a function of stomatal aperture (SA);
Fig. 3 shows stomatal open over time during a complete day/night cycle;
Fig. 4 schematically shows an applied scheme, with on the y-axis intensity, and on the x-axis time; the pulse are indicated on the background of a lighting period;
Fig. 5 shows the results based on the scheme of Fig. 4;
Fig. 6 shows another scheme;
Fig. 7 shows the results based on the scheme of Fig. 6; here, blue versus as possible red wake up light is shown;
Fig. 8 shows a growth validation of the wake up light;

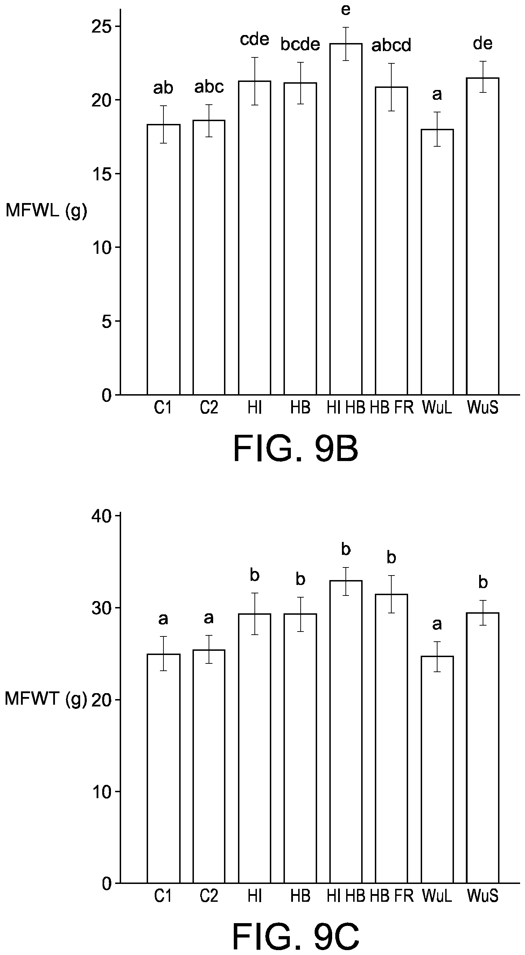

Figs. 9a-9c shows some examples with basil;
Figs. 10a-10b schematically depict some aspects and examples of time schemes; and
Fig. 11 schematically depicts embodiments and variants of the horticulture lighting system and the horticulture lighting arrangement.

The schematic drawings are not necessarily to scale.

### DETAILED DESCRIPTION OF THE EMBODIMENTS

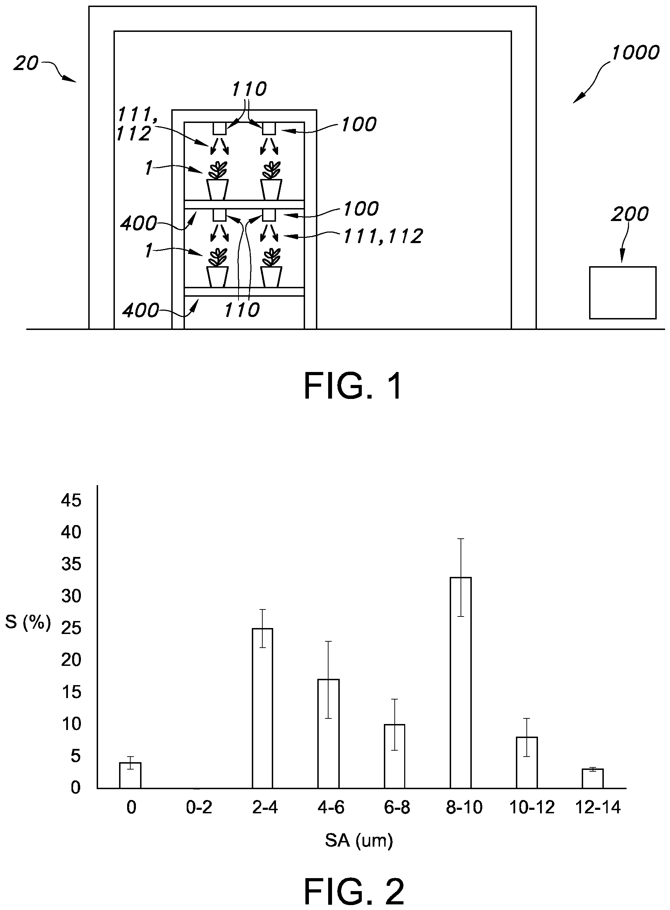

In plant farms (see: Fig. 1), the production per unit of area is much higher than the production in the open field. The use of water is minimized. Plant diseases and pests can be prevented more easily. Typically, in a plant farm, plants are grown in climate cells. Each cell is equipped with one or more racks. Each rack has multiple layers for growing plants. The plants (herbs such as basil or leafy vegetables such as lettuce) can also be grown hydroponically (the plants are grown without soil, using mineral or organic nutrients dissolved in water). Alternatively, as shown hear, the plants may be grown in substrate such as soil or particulate material.

Fig. schematically depicts an embodiment of a horticulture lighting system 100, comprising (i) a lighting device 110 configured to provide horticulture light 111 and (ii) a control system 200 configured to control the horticulture light 111. Especially, the control system 200 is further configured to provide according to a predetermined time scheme and/or as function of a sensor signal a pulse of horticulture light 111 in a spectral wavelength region at least comprising blue light 112 during a pulse period selected from the range of 1-60 min.

Reference 20 indicates a climate cell. The interior may only receive artificial light from the lighting devices 110, and essentially no daylight. The plants are grown on racks. Reference 400 indicates a structure on or in which the plants 1 can be arranged.

Recent experiments have shown that tomato yield was significantly increased by using high far red on top lighting. However, far-red is found to be reducing the stomatal density of the leaves. Far red has a signaling effect on the plants which gives the signal of being in the shade. Since stomata are the watergate of the plant, transpiration in the shade is less needed so the plant doesn't need that many stomata. It is therefore desirable to have essentially all the stomata open during the presence of photosynthetic light when plant are grown under artificial lighting, not only for the photosynthesis bur also for the water relation and equilibrium of the plant. Producing more yield while using less photon is the key for the future protected horticulture. Herein, it is amongst others proposed to reach the maximum of biomass production, without adding a proportional amount of light but instead use light as a signaling factor to trigger the plant activity faster in time in order to make a better light use efficiency during the photoperiod.

In addition it is proposed to enhance or shape the wake up light to a specific crop behavior by using a sensing technic to detect changes in the physiological behavior indicating a possible closing of stomata. This invention proposes a method to improve the fruit production yield (kg/m²/year) without a significant use of extra light. This invention is therefore focus on a significant energy saving from the use of lamps to grow plants. With sensing plant parameters, such as temperature, a correlation can be built on the stomata status of the plant and the appropriate time and intensity of the wake up light can be determined. In the simplest case, a wake up light can always be used at the beginning of the photoperiod time.

A dynamic blue wake lamp protocol implemented in an inter lighting module that could be equipped with dynamic light spectrum for horticulture. Dimming per color within a lamp is the most convenient product to be used. The lamp can include the recipe automatically as this will not affect the performances of the lamp or the energy label specifications. The lamp can be coupled to a thermal sensor indicating when a wake up is needed. This sensor could be for example a thermal sensor or thermal camera that detect plant temperature. Stomata are used also to regulate plant temperature by means of water evaporation via the stomata. When the plant transpires, the cooling effect can be detected with a high resolution thermal camera shown as a decrease in the temperature value. The plant will get warmer when the stomata are closed. This temperature cycle could be analyzed to choose a second wake up time during the day in order to optimize photosynthesis further. A delay can be chosen to let the plant closing its stomata in order to fulfil physiological requirement (nutrient uptake, growth) and when they open again add some extra blue light help the process going faster. This way the physiology of the plant is not disturb and only the stomatal opening is stimulated.

The lamp can be coupled to a camera to detect plant leaf angle and movement to correlate plant activity with stomatal opening. Some plant move during a complete cycle. Leaf angle on a plant canopy can be detected to correlate to the activity of the plant. In the same way as the thermal imaging this movement can be coupled to the lamp action to turn on a wake up light or not in order to accelerate the activity of the plant without disturbing its circadian rhythm.

Red/blue/Fr with high Far red top lighting (reducing the stomatal density on the abaxial side of the leaves) in combination of inter lighting or down lighting Red/blue dynamic light (30 minutes 100% blue, then 80-90% red with 10 to 20 % blue) producing a stimulation of abaxial stomata.

It may be useful that Far red only comes from the top of the canopy as Far-red will affect stomatal development on the abaxial part of the leaves (density decreases strongly under high Far red). It therefore part of this invention to claim that light for stimulation for stomatal opening arrive on the leaves from another side than the light for photosynthesis.

Using (mechanically controlled) reflectors intra canopy for redirecting the wake up light towards the abaxial side of the plants is possible. Top lighting is a dimmable light able to send 100 % blue or High blue light composition.

The light could be controlled with a signal from a camera indicating decreased stomatal opening (such as a leaf porometer or a thermal camera monitoring the transpiration and cooling of the plant).

The light could also be triggered from a sensor sensing changes in the daylight (darker day) in order to stimulate more the opening of the stomata than sunny days.

Stomatal behavior have been observed extensively on 3 different crops (tomato, lettuce and basilicum). The behavior of the stomatal density as a function of light has been observed for those species under different grow light strategies.

Using a stomatal imprint technic we have observed that the % of stomatal opening varies in the total cycle of the lettuce (over a 24h period). Lettuce stomata are about 130-140 µm diameter. In the first place we must define what we consider to be an open stomata versus a closed stomata. Fig. 2 shows a histogram from the number of stomata open with different aperture size. On the y-axis, S indicates the number of stomata; on the x-axis SA indicates the stomatal aperture in µm. On a lettuce leave, many stomata are present but some are open and some are closed but also some are more or less open. In order to do our analysis we define that a stomata is considered open when the aperture size is larger than 6 µm.

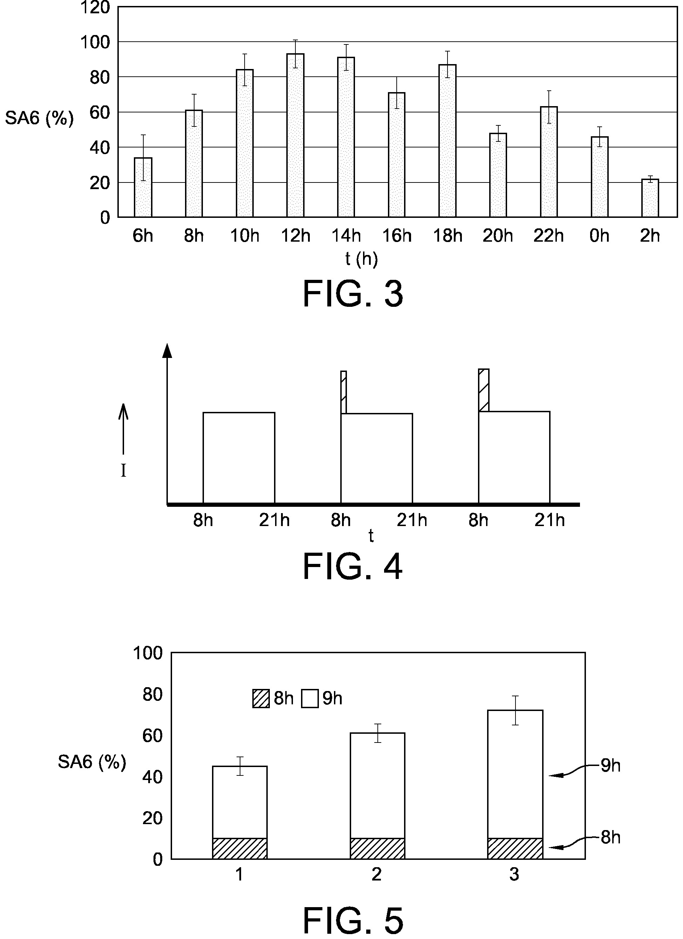

Measuring the stomatal opening status over a complete day cycle is represented on Fig. 3. On the x-axis, the time in hours is indicated, and on the y axis the stomata opening over 6 µm (SA6). What is noticeable on this graph is that the stomatal opening follows a slow increasing slope when the light is turned on (6 am), and a slow decreasing slop when the light is turned off, with even some decrease stomatal opening around 20h while the plants are still experiencing a constant growth light. When looking at this figure, the plant activity and photosynthesis is assumed to be at maximum when the stomata are the most open. We are establishing therefore the hypothesis of trying to accelerate the stomatal opening when the photosynthetic light is present so we can make a more efficient use of the photons.

So we establish an experiment where we would grow lettuces under a normal on/of light, and some lettuces under an on/of light but supplemented with extra blue photons for 15 or 30 minutes at the start of the day. Fig. 4 illustrates the experimental design, with I indicating the intensity, and showing periods with light between 8-21 h; and essentially darkness in between.

Stomata opening status were measured at 8h and at 9h; this is shown in Fig. 5. Lettuce experiencing a wake up light had significantly more stomata open at 9h than lettuce grown under normal on/off light conditions. The effect is not significantly different between 15 minutes and 30 minutes but the results are showing a trend with a higher % of stomata open at 30 minutes wake up time (65 % versus 55%). On the y-axis, again the stomata opening over 6 µm is indicated in % stomata. Directly at 8 h, there is essentially no difference, but at 9 h there is a substantial difference. Experiment 1 indicates white horticulture light with far red, and no pulse. Experiment 2 indicates an experiment with the same light, with a blue pulse of 15 minutes, and experiment 3 indicates the same as the latter, but now with a blue pulse of 30 minutes.

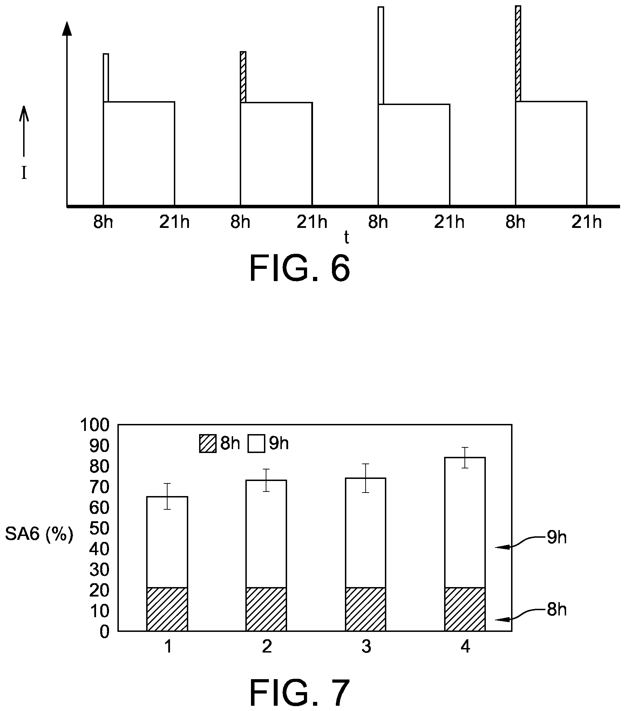

A second experiment was conducted to check if blue light was really the most efficient color or if a general increase of the intensity (using red for example) would also work similarly. Were in Fig. 4 pulses of blue light given, in the experiment as schematically depicted in Fig. 6, the small left pulses indicate a red and blue pulse, respectively, and the larger right pulses also indicate a red and blue pulse respectively.

The result of comparing a blue wake up and a red wake up is shown on figure 7 for two sets of intensity of the red and blue light (30 and 50 µmol/m²/s). Results that are significantly different are the 50 µmol blue compared to 30 µmol red. There is also a trend observed between red and blue at 30 µmol and between red and blue at 50 µmol showing that blue is working slightly better than red but that red could also be used in principle. However, in general blue appears to be a better wake up light, especially at larger intensities, as was also confirmed in other experiments. In Fig. 7, experiment 1 indicates white light with far red and a 30 µmol red pulse; experiment 2 indicates white light with far red and a 30 µmol blue pulse; experiment 3 indicates white light with far red and a 50 µmol red pulse; and experiment 4 indicates white light with far red and a 50 µmol blue pulse.

Also a growth validation experiment was done to check whether the wake up light strategy will enhance the growth rate of the plant when apply on the full growth cycle. This validation was done on Basil plant with a growth cycle of 39 days. A control batch (experiment 1) is grown under a normal on/off light, while another batch (experiment 2) is grown under On/off light with a 30 minutes additional blue light (50 µmol) in the beginning. A third batch (experiment 3) is grown under 20% more light with a simple on/off.

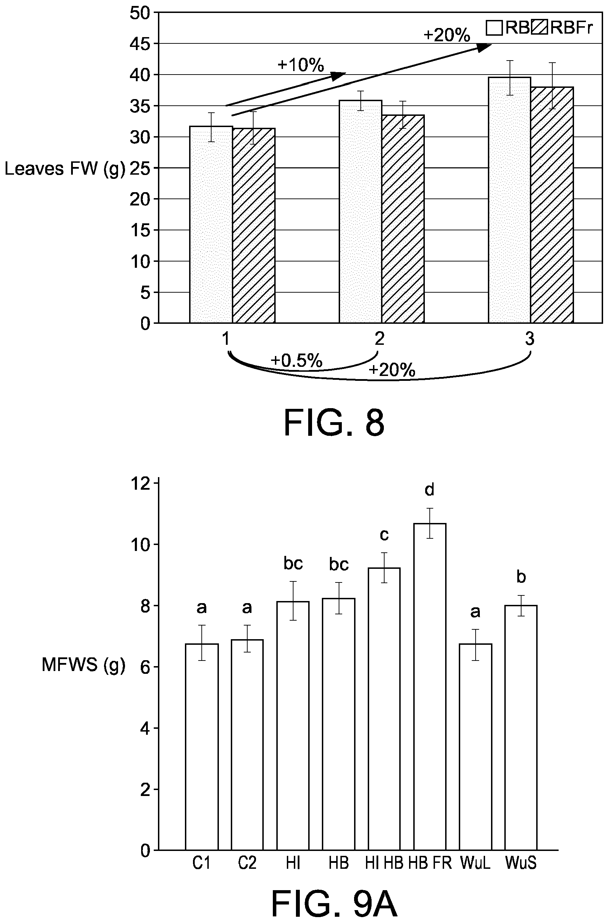

The results are shown on Fig. 8. First we see that adding 20 % more light increases the fresh weight of about 20% as well. This means that we are still in the linear regime and that the plant is not grown under light saturation. The plant grown under the wake up light are shown an increase of fresh weight of 10% on the average value while the extra use of light is less than 1% extra because of the wake up strategy. We demonstrate therefore that it is possible to achieve an increased biomass production using light as a signaling mechanism rather than just fuel for photosynthesis. This make the production more efficient and a daily wake up on the plant did not seem to affect the physiology and other quality attributes of the plant.

In further experiments it also appeared that a short wake up, such as of 30 minutes is better than a relative long wake up, such as of 60 minutes.

Further, also lettuce was tested. This is shown in Figs. 8a-8c. C1, C2 are control standard recipes. HI is 20% more light. HB is standard recipe with High level of blue %. HI HB, is 20 % more light at a higher blue percentage. HB Fr, high blue with additional far red. Wus is same as control but with wake up light 30 minute, WuL, is wake up light 30 minutes + 30 minutes in the middle on night time. On stem, light quality has a strong effect. On leaves a bit less effect is observed, which might be due to the poor statistics. On total weight of the plant (stem + leaves) the remaining significant effects are with the short wake up light compared to control. On the x-axis, the light recipes are indicated. On the y-axis MFW indicates the mean fresh weight, and the last letters S, L and T indicate stem, leave, and total, respectively.

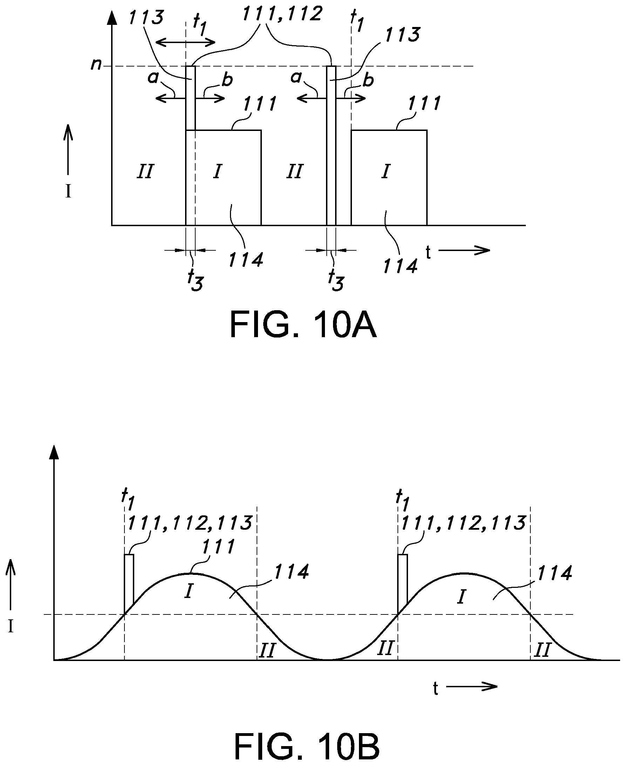

Figs. 10a-10b schematically depict some aspects. In Fig. 10a, the pulse period is indicated with t3. For instance, the pulse has an average intensity of n µmol/m²/s photons over the pulse period. At least 0.5 h preceding the pulse, indicated with the arrows a, and at least 0.5 h following to the pulse, indicated with the arrows b, the average intensity of the second horticulture light in the same spectral region as (of the horticulture light of) the pulse are each at maximum 0.75*n µmol/m²/s photons. Hence, approximately the pulse is at least 30 % higher than the later horticulture lighting in the same spectral region. Hence, the blocks in these figures in fact indicate the presence of at least blue light. Here, t1 indicates a first time, i.e. a time there is again an increase in the horticulture intensity (in the spectral region of the pulse). In embodiments, the spectral distribution of the horticulture light during the pulse may differ from the spectra distribution of the horticulture light during the horticulture lighting period, with the pulse of blue light 112 having relatively more blue horticulture light (or only blue light), and the horticulture light 111 during the horticulture lighting period at least also having red light and/or far red light. Reference 113 is used to especially indicate first horticulture light. Hence, reference 111 may refer to horticulture light in general, such as first horticulture light 113 and/or second horticulture light. The latter is indicated with reference 114.

Figs. 10a and 10b also show examples of predefined schemes wherein a high intensity period I with more or increasing horticulture light intensity 111 alternates with a low intensity period II with less or reducing horticulture light intensity (including essentially no horticulture light). The pulse may be provided within a time period of 0.5 h preceding a first time t1 and 0.5 h following to the first time t1, wherein the first time is defined as the time wherein a period with more or increasing horticulture light intensity (111) commences, wherein the high intensity period and low intensity period are each at least an hour, and wherein a time averaged intensity of the second horticulture light during the low intensity period is at maximum 50% of a time averaged intensity of the second horticulture light during the high intensity period.

Reference a indicates a time preceding the pulse and reference b indicates the time following the pulse. Within this time frame the pulse is provided and the period of horticulture light commences and continues. In the first example (left) in Fig. 10a, the pulse might considered to essentially coincide with the period of horticulture light. As shown, the remaining time of the horticulture period is at least equal in length to the light pulse period; here, in this example a few times larger.

As shown in Figs. 10a and 10b, the period of horticulture light (not including the pulse) is in time longer than the pulse period, especially at least 2 times the time length of the pulse period, such as at least 4 times. For instance, the pulse may be 10-40 minutes and the horticulture lighting period may be at least 4 hours, such as at least 8 hours.

Referring to Figs. 10a (left example) and 10b in specific embodiments it may be the case that the first horticulture light and the second horticulture light have the same spectral distributions, or at least in the spectral range of the first horticulture light 113 the first horticulture light and the second horticulture light 114 have the same spectral distributions. This may e.g. be the case when a single lighting device, or a single light source is used to provide the second horticulture light, though other options may also be possible. When the pulse of first horticulture light is essentially a temporary increase of the second horticulture light, for the purpose of defining intensities, all light in the spectral range of the first horticulture light (also of the second horticulture light) during the pulse of first horticulture light is considered first horticulture light of the pulse.

Referring to Fig. 4, 6 and 10a, the horticulture light intensity (including PAR and optionally far red) may thus in average over the horticulture lighting period be e.g. at maximum 0.75*n µmol/m²/s photons of the horticulture light in the pulse period.

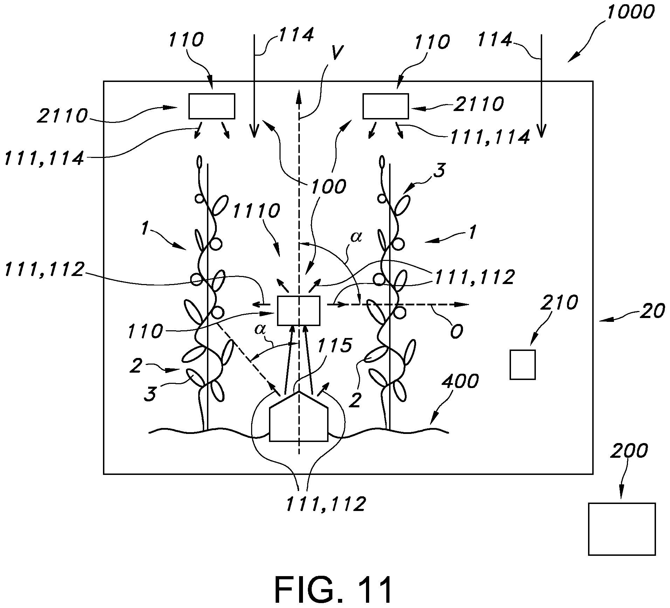

Fig. 11 schematically depicts an embodiment of the lighting system 100 and the horticulture arrangement 1000 the lighting device 110 is configured to provide the horticulture light 111 with an optical axis O having an angle α selected from the range -135° to 135° relative to a vertical, indicated with reference V. This applies to the lighting device 110 that is configured as inter lighting. This lighting device 110 is configured as side lighter and up lighter. Actually, this lighting device is also configures as down lighter, but effectively, with the reflector(s) 115 as uplighter. In this way the abaxial parts 3 of the leaves 2 can be irradiated. Hence, Fig. 11 also shows an embodiment wherein the pulse in the spectral wavelength region at least comprising blue light 112 is directed to an abaxial part 3 of the leaves 2 of the plant 1 and/or an adaxial part of the leaves, especially an abaxial part 3.

Further, Fig. 11 also shows an embodiment wherein a sensor 210 is applied. The sensor 210 may especially be configured to monitor a parameter of a plant 1 and to provide a corresponding sensor signal. The control system 200 may be configured to provide the pulse according to a predetermined relation between sensor signal and horticulture lighting properties (of one or more of the light pulse of horticulture light and the second horticulture light (in embodiments wherein the horticulture lighting system also provides at least part of the second horticulture light).

Fig. 11 also shows an embodiment wherein the lighting system 100 or the horticulture arrangement 1000 comprise a first lighting device 1110 and a second lighting device 2110, wherein the first lighting device 1110 is configured to provide at least blue horticulture light 111. The horticulture lighting system 100 is configured to provide the pulse with at least the first lighting device 1110. The second lighting device 2110 is configured to provide at least second horticulture light having one or more wavelengths selected from one or more wavelength ranges selected of the group consisting of 625-675 nm and 700-850 nm (such as especially (at least in the range of) 700-800 nm). Especially, the first lighting device 1110 is configured as one or more of uplighter and side lighter, and the second lighting device 2110 is configured as one or more of side lighter and down lighter (here essentially down lighter).

The arrangement 1000 may be a closed arrangement, in the sense that essentially no solar light is received by the plants. However, in specific embodiments also solar light may be received by the plants 1. Hence, by way of example, the arrows indicated with references 114 show that second horticulture light 114 may be from one or more of the lighting device 110 and from the sun as daylight. In dependence of the solar light, and its rhythm, the control system may provide the pulse of blue first horticulture light 113.

The term "substantially" herein, such as in "substantially all light" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of' but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention as defined by the claims, and that those skilled in the art will be able to design many alternative embodiments without departing from the scope of the appended claims.

## Claims

1. A horticulture lighting system (100), comprising:
- a lighting device (110) configured to provide horticulture light (111);
- a control system (200) configured to control the lighting device (110) to provide according to a predetermined time scheme and/or as function of a sensor signal a light pulse of horticulture light (111) in a spectral wavelength region
**characterized in that** the spectral wavelength region at least comprising blue light (112) during a light pulse period selected from a range of 1-60 min, wherein the light pulse period precedes or at least partially overlaps a second period wherein second horticulture light is provided, and wherein the second period is longer than the light pulse period.

2. The horticulture lighting system (100) according to claim 1, wherein the light pulse of blue light (112) includes light having a wavelength selected from a range of 425-475 nm.

3. The horticulture lighting system (100) according to any one of the preceding claims, wherein the light pulse has an average irradiance of n µmol/m²/s photons over the light pulse period, and wherein at least 0.5 h preceding and at least 0.5 h following to the light pulse, the average irradiance of the second horticulture light in the same spectral region as of the horticulture light of the light pulse are each at maximum 0.75*n µmol/m²/s photons.

4. The horticulture lighting system (100) according to any one of the preceding claims, wherein the light pulse period is selected from a range of 10-40 min, wherein the control system (200) is configured to provide during the light pulse period the light pulse with an irradiance of 10-70 µmol/m²/s photons, and wherein the control system (200) is configured to provide during the light pulse period a radiant fluence of 20,000-100,000 µmol/m² photons.

5. The horticulture lighting system (100) according to any one of the preceding claims, wherein the control system (200) is configured to provide the light pulse of horticulture light (111) and the second horticulture light according to a predefined scheme wherein a high intensity period with second horticulture light intensity alternates with a low intensity period with no second horticulture light intensity or less second horticulture light intensity than in the high intensity period, and wherein the control system (200) is configured to provide the light pulse within a time period of 0.5 h preceding and 0.5 h following a start of the high intensity period, wherein the high intensity period and low intensity period are each at least an hour, and wherein a time averaged intensity of the second horticulture light during the low intensity period is at maximum 50% of a time averaged intensity of the second horticulture light during the high intensity period.

6. The horticulture lighting system (100) according to claim 5, wherein the predefined scheme is based on a day-night rhythm created by the second horticulture light, and wherein the control system (200) is configured to provide the light pulse at dawn.

7. The horticulture lighting system (100) according to any one of the preceding claims, comprising a first lighting device (1110) and a second lighting device (1110), wherein the first lighting device (1110) is configured to provide at least blue horticulture light (111), wherein the horticulture lighting system (100) is configured to provide the light pulse with at least the first lighting device (1110), and wherein the second lighting device (2110) is configured to provide at least the second horticulture light having one or more wavelengths selected from one or more wavelength ranges selected of the group consisting of (i) 625-675 nm and (ii) 700-850 nm, the horticulture lighting system (100) further comprising a sensor (210), wherein the sensor (210) is configured to monitor a parameter of a plant (1) and to provide a corresponding sensor signal, and wherein the control system (200) is configured to provide the light pulse according to a predetermined relation between sensor signal and horticulture lighting properties of one or more of the light pulse of horticulture light (111) and the second horticulture light.

8. A horticulture arrangement (1000) for plants (1), the horticulture arrangement (100) comprising a horticulture lighting system (100) according to any one of the preceding claims; and a support (400) for support of the plants (1).

9. The horticulture arrangement (1000) according to claim 8 wherein, when dependent on claim 7, the first lighting device (1110) is configured as one or more of uplighter and side lighter, and wherein the second lighting device (2110) is configured as one or more of side lighter and down lighter.

10. The horticulture arrangement (1000) according to any one of the preceding claims 8-9, wherein the control system is further configured to provide an elevated CO₂ concentration by means of a device for providing CO₂ at least during the light pulse period.

11. A method of providing horticulture light (111) to plants (1) in a horticulture arrangement (1000), the method comprising providing, according to a predetermined time scheme and/or as function of a sensor signal, a light pulse of horticulture light (111) in a spectral wavelength region
**characterized in that** the spectral wavelength region at least comprising blue light (112) during a light pulse period selected from a range of 1-60 min, wherein the light pulse period precedes or at least partially overlaps a second period of second horticulture light, and wherein the second period is longer than the light pulse period.

12. The method according to claim 11, wherein the light pulse of blue light (112) includes light having a wavelength selected from a range of 425-475 nm, wherein the light pulse period is selected from a range of 10-40 min with an irradiance of 10-70 µmol/m²/s photons, the method further comprising providing during the light pulse period a radiant fluence of 20,000-100,000 µmol/m² photons,

13. The method according to any one of the preceding claims 11-12, wherein a high intensity period with second horticulture light intensity alternates with a low intensity period with no second horticulture light intensity or less second horticulture light intensity than in the high intensity period, wherein the second horticulture light is received as solar light and/or provided by a lighting device (110), and wherein the method further comprises providing the light pulse within a time period of 0.5 h preceding and 0.5 h following a start of the high intensity period, wherein the high intensity period and low intensity period are each at least an hour, and wherein a time averaged intensity of the second horticulture light during the low intensity period is at maximum 50% of a time averaged intensity of the second horticulture light during the high intensity period.

14. The method according to any one of the preceding claims 11-13 when the light pulse of horticulture light (111) is provided as function of a sensor signal, wherein the light pulse is directed to an abaxial part (3) of leaves (2) of the plant (1), and wherein the method further comprises monitoring a parameter of a plant (1) and providing the light pulse according to a predetermined relation between a parameter value and horticulture lighting properties of the light pulse of the horticulture light (111).

15. A computer program product, when running on a computer which is functionally coupled to or comprised by a horticulture lighting system (100) of any one of the claims 1-7 or a horticulture arrangement (1000) of any one of the claims 8-10, is capable of bringing about the method of any one of the preceding claims 11-14.

## Patentansprüche

1. Hortikultur-Beleuchtungssystem (100), umfassend:
- eine Beleuchtungsvorrichtung (110), die zur Bereitstellung von Hortikulturlicht (111) konfiguriert ist;
- ein Steuersystem (200), das zur Steuerung der Beleuchtungsvorrichtung (110) konfiguriert ist, um entsprechend einem zuvor festgelegten Zeitschema und/oder als Funktion eines Sensorsignals einen Lichtimpuls eines Hortikulturlichts (111) in einem spektralen Wellenlängenbereich bereitzustellen,
**dadurch gekennzeichnet, dass** der spektrale Wellenlängenbereich während einer aus einem Bereich von 1-60 min ausgewählten Lichtimpulsperiode zumindest blaues Licht (112) umfasst, wobei die Lichtimpulsperiode einer zweiten Periode, in der zweites Hortikulturlicht bereitgestellt wird, vorausgeht oder zumindest mit dieser teilweise überlappt, und wobei die zweite Periode länger als die Lichtimpulsperiode ist.

2. Hortikultur-Beleuchtungssystem (100) nach Anspruch 1, wobei der Lichtimpuls von blauem Licht (112) Licht enthält, das eine aus einem Bereich von 425-475 nm ausgewählte Wellenlänge aufweist.

3. Hortikultur-Beleuchtungssystem (100) nach einem der vorangegangenen Ansprüche, wobei der Lichtimpuls eine durchschnittliche Bestrahlungsstärke von n µmol/m²/s Photonen über die Lichtimpulsperiode aufweist, und wobei mindestens 0,5 h dem Lichtimpuls vorausgehen und mindestens 0,5 h auf den Lichtimpuls folgen, wobei die durchschnittliche Bestrahlungsstärke des zweiten Hortikulturlichts in dem gleichen spektralen Bereich wie diese des Hortikulturlichts des Lichtimpulses jeweils bei maximal 0,75*n µmol/m²/s Photonen liegt.

4. Hortikultur-Beleuchtungssystem (100) nach einem der vorangegangenen Ansprüche, wobei die Lichtimpulsperiode aus einem Bereich von 10-40 min ausgewählt wird, wobei das Steuersystem (200) so konfiguriert ist, dass es während der Lichtimpulsperiode den Lichtimpuls mit einer Bestrahlungsstärke von 10-70 µmol/m²/s Photonen bereitstellt, und wobei das Steuersystem (200) so konfiguriert ist, dass es während der Lichtimpulsperiode eine Strahlungsfluenz von 20.000-100.000 µmol/m² Photonen bereitstellt.

5. Hortikultur-Beleuchtungssystem (100) nach einem der vorangegangenen Ansprüche, wobei das Steuersystem (200) so konfiguriert ist, dass es den Lichtimpuls des Hortikulturlichts (111) und des zweiten Hortikulturlichts entsprechend einem vordefinierten Schema bereitstellt, wobei eine Periode hoher Intensität mit einer Intensität des zweiten Hortikulturlichts sich mit einer Periode geringer Intensität mit keiner Intensität des zweiten Hortikulturlichts oder weniger Intensität des zweiten Hortikulturlichts als in der Periode hoher Intensität abwechselt, und wobei das Steuersystem (200) so konfiguriert ist, dass es den Lichtimpuls innerhalb einer Zeitperiode von 0,5 h, die einem Beginn der Periode hoher Intensität vorausgeht, und einer Zeitperiode von 0,5 h, die auf einen Beginn der Periode hoher Intensität folgt, bereitstellt, wobei die Periode hoher Intensität und die Periode geringer Intensität jeweils mindestens eine Stunde betragen, und wobei eine zeitlich gemittelte Intensität des zweiten Hortikulturlichts während der Periode geringer Intensität maximal 50% einer zeitlich gemittelten Intensität des zweiten Hortikulturlichts während der Periode hoher Intensität beträgt.

6. Hortikultur-Beleuchtungssystem (100) nach Anspruch 5, wobei das vordefinierte Schema auf einem durch das zweite Hortikulturlicht erzeugten Tag-Nacht-Rhythmus basiert, und wobei das Steuersystem (200) so konfiguriert ist, dass es den Lichtimpuls bei Tagesanbruch bereitstellt.

7. Hortikultur-Beleuchtungssystem (100) nach einem der vorangegangenen Ansprüche mit einer ersten Beleuchtungsvorrichtung (1110) und einer zweiten Beleuchtungsvorrichtung (1110), wobei die erste Beleuchtungsvorrichtung (1110) so konfiguriert ist, dass sie zumindest blaues Hortikulturlicht (111) bereitstellt, wobei das Hortikultur-Beleuchtungssystem (100) so konfiguriert ist, dass es den Lichtimpuls bei zumindest der ersten Beleuchtungsvorrichtung (1110) bereitstellt, und wobei die zweite Beleuchtungsvorrichtung (2110) so konfiguriert ist, dass sie zumindest das zweite Hortikulturlicht mit einer oder mehreren Wellenlängen bereitstellt, die aus einem oder mehreren, aus der Gruppe bestehend aus (i) 625-675 nm und (ii) 700-850 nm ausgewählten Wellenlängenbereichen ausgewählt werden, wobei das Hortikultur-Beleuchtungssystem (100) weiterhin einen Sensor (210) umfasst, wobei der Sensor (210) so konfiguriert ist, dass er einen Parameter einer Pflanze (1) überwacht und ein entsprechendes Sensorsignal bereitstellt, und wobei das Steuersystem (200) so konfiguriert ist, dass es den Lichtimpuls entsprechend einer vorher festgelegten Relation zwischen dem Sensorsignal und Hortikultur-Beleuchtungseigenschaften von einem oder mehreren des Lichtimpulses des Hortikulturlichts (111) und des zweiten Hortikulturlichts bereitstellt.

8. Hortikulturanordnung (1000) für Pflanzen (1), wobei die Hortikulturanordnung (1000) ein Hortikultur-Beleuchtungssystem (100) nach einem der vorangegangenen Ansprüche sowie eine Auflage (400) umfasst, um die Pflanzen (1) zu tragen.

9. Hortikulturanordnung (1000) nach Anspruch 8, wobei, bei Abhängigkeit von Anspruch 7, die erste Beleuchtungsvorrichtung (1110) als ein oder mehrere Leuchten zur Deckenausleuchtung sowie Seitenleuchten konfiguriert ist, und wobei die zweite Beleuchtungsvorrichtung (2110) als eine oder mehrere Seitenleuchten sowie Leuchten zur Bodenausleuchtung konfiguriert ist.

10. Hortikulturanordnung (1000) nach einem der vorangegangenen Ansprüche 8-9, wobei das Steuersystem weiterhin so konfiguriert ist, dass es eine erhöhte CO₂-Konzentration mit Hilfe einer Vorrichtung vorsieht, um CO₂ zumindest während der Lichtimpulsperiode bereitzustellen.

11. Verfahren zur Bereitstellung von Hortikulturlicht (111) für Pflanzen (1) in einer Hortikulturanordnung (1000), wobei das Verfahren beinhaltet, dass gemäß einem vorher festgelegten Zeitschema und/oder als Funktion eines Sensorsignals ein Lichtimpuls eines Hortikulturlichts (111) in einem spektralen Wellenlängenbereich bereitgestellt wird, **dadurch gekennzeichnet, dass** der spektrale Wellenlängenbereich während einer aus einem Bereich von 1-60 min ausgewählten Lichtimpulsperiode zumindest blaues Licht (112) umfasst, wobei die Lichtimpulsperiode einer zweiten Periode des zweiten Hortikulturlichts vorausgeht oder zumindest mit dieser teilweise überlappt, und wobei die zweite Periode länger als die Lichtimpulsperiode ist.

12. Verfahren nach Anspruch 11, wobei der Lichtimpuls von blauem Licht (112) Licht enthält, das eine aus einem Bereich von 425-475 nm ausgewählte Wellenlänge aufweist, wobei die Lichtimpulsperiode aus einem Bereich von 10-40 min mit einer Bestrahlungsstärke von 10-70 µmol/m²/s Photonen ausgewählt wird, wobei das Verfahren weiterhin beinhaltet, dass während der Lichtimpulsperiode eine Strahlungsfluenz von 20.000-100.000 µmol/m² Photonen bereitgestellt wird.

13. Verfahren nach einem der vorangegangenen Ansprüche 11-12, wobei eine Periode hoher Intensität mit einer Intensität des zweiten Hortikulturlichts sich mit einer Periode geringer Intensität mit keiner Intensität des zweiten Hortikulturlichts oder weniger Intensität des zweiten Hortikulturlichts als in der Periode hoher Intensität abwechselt, wobei das zweite Hortikulturlicht als Solarlicht empfangen und/oder von einer Beleuchtungsvorrichtung (110) bereitgestellt wird, und wobei das Verfahren weiterhin beinhaltet, dass der Lichtimpuls innerhalb einer Zeitperiode von 0,5 h, die einem Beginn der Periode hoher Intensität vorausgeht, und einer Zeitperiode von 0,5 h, die auf einen Beginn der Periode hoher Intensität folgt, bereitgestellt wird, wobei die Periode hoher Intensität und die Periode geringer Intensität jeweils mindestens eine Stunde betragen, und wobei eine zeitlich gemittelte Intensität des zweiten Hortikulturlichts während der Periode geringer Intensität maximal 50% einer zeitlich gemittelten Intensität des zweiten Hortikulturlichts während der Periode hoher Intensität beträgt.

14. Verfahren nach einem der vorangegangenen Ansprüche 11-13, wobei der Lichtimpuls des Hortikulturlichts (111) als Funktion eines Sensorsignals bereitgestellt wird, wobei der Lichtimpuls auf einen achsfernen Teil (3) von Blättern (2) der Pflanze (1) gerichtet wird, und wobei das Verfahren weiterhin das Überwachen eines Parameters einer Pflanze (1) sowie das Bereitstellen des Lichtimpulses entsprechend einer vorher festgelegten Relation zwischen einem Parameterwert und Hortikultur-Beleuchtungseigenschaften des Lichtimpulses des Hortikulturlichts (111) beinhaltet.

15. Computerprogrammprodukt, das bei Ablaufen auf einem Computer, der mit einem Hortikultur-Beleuchtungssystem (100) nach einem der Ansprüche 1-7 oder einer Hortikulturanordnung (1000) nach einem der Ansprüche 8-10 funktional gekoppelt oder in einem/einer solchen enthalten ist, imstande ist, das Verfahren nach einem der vorangegangenen Ansprüche 11-14 zu realisieren.

## Revendications

1. Système d'éclairage d'horticulture (100), comprenant :
- un dispositif d'éclairage (110) configuré pour fournir de la lumière d'horticulture (111) ;
- un système de commande (200) configuré pour commander le dispositif d'éclairage (110) pour fournir, selon un schéma temporel prédéterminé et/ou en fonction d'un signal de capteur, une impulsion lumineuse de lumière d'horticulture (111) dans une région de longueur d'onde spectrale,
**caractérisé en ce que** la région de longueur d'onde spectrale comprenant au moins une lumière bleue (112) pendant une période d'impulsion lumineuse sélectionnée dans une plage de 1 à 60 min, dans lequel la période d'impulsion lumineuse précède, ou chevauche au moins partiellement, une seconde période pendant laquelle une seconde lumière d'horticulture est fournie, et dans lequel la seconde période est plus longue que la période d'impulsion lumineuse.

2. Système d'éclairage d'horticulture (100) selon la revendication 1, dans lequel l'impulsion lumineuse de lumière bleue (112) inclut une lumière ayant une longueur d'onde sélectionnée dans une plage de 425 à 475 nm.

3. Système d'éclairage d'horticulture (100) selon l'une quelconque des revendications précédentes, dans lequel l'impulsion lumineuse présente un rayonnement moyen de n µmol/m²/s photons pendant la période d'impulsion lumineuse et dans lequel au moins 0,5 h précédent et au moins 0,5 h suivant l'impulsion lumineuse, le rayonnement moyen de la seconde lumière d'horticulture dans la même région spectrale à partir de la lumière d'horticulture de l'impulsion lumineuse sont chacun au maximum 0,75*n µmol/m²/s photons.

4. Système d'éclairage d'horticulture (100) selon l'une quelconque des revendications précédentes, dans lequel la période d'impulsion lumineuse est sélectionnée dans une plage de 10 à 40 min, dans lequel le système de commande (200) est configuré pour fournir, pendant la période d'impulsion lumineuse, l'impulsion lumineuse avec un rayonnement de 10 à 70 µmol/m²/s photons et dans lequel le système de commande (200) est configuré pour fournir, pendant la période d'impulsion lumineuse, une fluence rayonnante de 20 000 à 100 000 µmol/m² photons

5. Système d'éclairage d'horticulture (100) selon l'une quelconque des revendications précédentes, dans lequel le système de commande (200) est configuré pour fournir l'impulsion lumineuse de lumière d'horticulture (111) et la seconde lumière d'horticulture selon un schéma prédéfini, dans lequel une période de forte intensité ayant une seconde intensité de lumière d'horticulture alterne avec une période de faible intensité n'ayant pas de seconde intensité de lumière d'horticulture ou ayant moins de seconde intensité de lumière d'horticulture que pendant la période de forte intensité, et dans lequel le système de commande (200) est configuré pour fournir l'impulsion lumineuse pendant une période de temps de 0,5 h précédent et de 0,5 h suivant le début de la période de forte intensité, dans lequel la période de forte intensité et la période de faible intensité font chacune au moins une heure et dans lequel une intensité moyenne dans le temps de la seconde lumière d'horticulture pendant la période de faible intensité est au maximum 50 % d'une intensité moyenne dans le temps de la seconde lumière d'horticulture pendant la période de forte intensité.

6. Système d'éclairage d'horticulture (100) selon la revendication 5, dans lequel le schéma prédéfini est basé sur un rythme jour-nuit créé par la seconde lumière d'horticulture et dans lequel le système de commande (200) est configuré pour fournir l'impulsion lumineuse à l'aube.

7. Système d'éclairage d'horticulture (100) selon l'une quelconque des revendications précédentes, comprenant un premier dispositif d'éclairage (1110) et un second dispositif d'éclairage (1110), dans lequel le premier dispositif d'éclairage (1110) est configuré pour fournir au moins une lumière d'horticulture bleue (111), dans lequel le système d'éclairage d'horticulture (100) est configuré pour fournir l'impulsion lumineuse avec au moins le premier dispositif d'éclairage (1110), et dans lequel le second dispositif d'éclairage (2110) est configuré pour fournir au moins la seconde lumière d'horticulture ayant une ou plusieurs longueurs d'onde sélectionnées dans une ou plusieurs plages de longueur d'onde sélectionnées dans le groupe se composant (i) de 625 à 675 nm et (ii) de 700 à 850 nm, le système d'éclairage d'horticulture (100) comprenant en outre un capteur (210), dans lequel le capteur (210) est configuré pour surveiller un paramètre d'une plante (1) et pour fournir un signal de capteur correspondant et dans lequel le système de commande (200) est configuré pour fournir l'impulsion lumineuse selon une relation prédéterminée entre un signal de capteur et des propriétés d'éclairage d'horticulture d'une ou de plusieurs de l'impulsion lumineuse de lumière d'horticulture (111) et de la seconde lumière d'horticulture.

8. Agencement d'horticulture (1000) pour des plantes (1), l'agencement d'horticulture (100) comprenant un système d'éclairage d'horticulture (100) selon l'une quelconque des revendications précédentes ; et un support (400) pour le support des plantes (1).

9. Agencement d'horticulture (1000) selon la revendication 8, dans lequel, lorsqu'elle dépend de la revendication 7, le premier dispositif d'éclairage (1110) est configuré sous la forme d'un ou de plusieurs d'un dispositif d'éclairage vers le haut et d'un dispositif d'éclairage latéral et dans lequel le second dispositif d'éclairage (2110) est configuré sous la forme d'un ou de plusieurs d'un dispositif d'éclairage latéral et d'un dispositif d'éclairage vers le bas.

10. Agencement d'horticulture (1000) selon l'une quelconque des précédentes revendications 8-9, dans lequel le système de commande est en outre configuré pour fournir une concentration en CO₂ élevée au moyen d'un dispositif pour fournir du CO₂ au moins pendant la période d'impulsion lumineuse.

11. Procédé de fourniture d'une lumière d'horticulture (111) à des plantes (1) dans un agencement d'horticulture (1000), le procédé comprenant la fourniture, selon un schéma temporel prédéterminé et/ou en fonction d'un signal de capteur, d'une impulsion lumineuse de lumière d'horticulture (111) dans une région de longueur d'onde spectrale,
**caractérisé en ce que** la région de longueur d'onde spectrale comprend au moins une lumière bleue (112) pendant une période d'impulsion lumineuse sélectionnée dans une plage de 1 à 60 min, dans lequel la période d'impulsion lumineuse précède, ou chevauche au moins partiellement, une seconde période de seconde lumière d'horticulture, et dans lequel la seconde période est plus longue que la période d'impulsion lumineuse.

12. Procédé selon la revendication 11, dans lequel l'impulsion lumineuse de lumière bleue (112) inclut une lumière ayant une longueur d'onde sélectionnée dans une plage de 425 à 475 nm, dans lequel la période d'impulsion lumineuse est sélectionnée dans une plage de 10 à 40 min avec un rayonnement de 10 à 70 µmol/m²/s photons, le procédé comprenant en outre la fourniture, pendant la période d'impulsion lumineuse, d'une fluence rayonnante de 20 000 à 100 000 µmol/m² photons.

13. Procédé selon l'une quelconque des précédentes revendications 11-12, dans lequel une période de forte intensité ayant une seconde intensité de lumière d'horticulture alterne avec une période de faible intensité n'ayant pas de seconde intensité de lumière d'horticulture ou ayant moins de seconde intensité de lumière d'horticulture que pendant la période de forte intensité, dans lequel la seconde lumière d'horticulture est reçue sous la forme de la lumière solaire et/ou fournie par un dispositif d'éclairage (110), et dans lequel le procédé comprend en outre la fourniture de l'impulsion lumineuse pendant une période de temps de 0,5 h précédent et de 0,5 h suivant le début de la période de forte intensité, dans lequel la période de forte intensité et la période de faible intensité font chacune au moins une heure et dans lequel une intensité moyenne dans le temps de la seconde lumière d'horticulture pendant la période de faible intensité est au maximum 50 % d'une intensité moyenne dans le temps de la seconde lumière d'horticulture pendant la période de forte intensité.

14. Procédé selon l'une quelconque des précédentes revendications 11-13, lorsque l'impulsion lumineuse de lumière d'horticulture (111) est fournie en fonction d'un signal de capteur, dans lequel l'impulsion lumineuse est dirigée vers une partie abaxiale (3) de feuilles (2) de la plante (1) et dans lequel le procédé comprend en outre la surveillance d'un paramètre d'une plante (1) et la fourniture de l'impulsion lumineuse selon une relation prédéterminée entre une valeur de paramètre et des propriétés d'éclairage d'horticulture de l'impulsion lumineuse de la lumière d'horticulture (111).

15. Produit-programme d'ordinateur, lorsqu'il est exécuté sur un ordinateur qui est couplé de manière fonctionnelle à ou composé par un système d'éclairage d'horticulture (100) selon l'une quelconque des revendications 1-7 ou un agencement d'horticulture (1000) selon l'une quelconque des revendications 8-10, est capable de mettre en oeuvre le procédé selon l'une quelconque des précédentes revendications 11-14.
